Europäisches Patentamt

European Patent Office

Office européen des brevets

(11) Veröffentlichungsnummer: **0 248 178**
B1

# (12) EUROPÄISCHE PATENTSCHRIFT

(45) Veröffentlichungstag der Patentschrift:
27.12.90

(21) Anmeldenummer: 87105626.3

(22) Anmeldetag: 15.04.87

(51) Int. Cl.⁵: **B60T 1/10, B60K 8/00**

(54) Kraftfahrzeug mit einer Antriebseinrichtung für eine Hinterachse.

(30) Priorität: 06.06.86 DE 3619187

(43) Veröffentlichungstag der Anmeldung:
09.12.87 Patentblatt 87/50

(45) Bekanntmachung des Hinweises auf die Patenterteilung:
27.12.90 Patentblatt 90/52

(84) Benannte Vertragsstaaten:
AT CH DE FR GB IT LI NL SE

(56) Entgegenhaltungen:
EP-A- 0 047 642
DE-A- 2 904 572
GB-A- 2 019 537

(73) Patentinhaber: MAN Nutzfahrzeuge Aktiengesellschaft,
Dachauer Strasse 667 Postfach 50 06 20,
D-8000 München 50(DE)

(72) Erfinder: Lexen, Gerald, Dipl.-Ing., Johann
Emmerstrasse 1, D-8000 München 50(DE)

## Beschreibung

Die Erfindung betrifft ein Kraftfahrzeug mit Merkmalen gemäß Anspruch 1.

Aus der DE-Z «o + p, Ölhydraulik + Pneumatik, 22 (1976), Nr. 4, Seiten 195 bis 199» ist ein Kraftfahrzeug, insbesondere im Stop-And-Go-Verkehr betriebenes Nutzfahrzeug, nämlich ein Stadtlinienbus mit hydrostatischer Bremsenergierückgewinnungseinrichtung bekannt. Dabei sind die Antriebseinrichtung für die Hinterachse und die Einrichtung für die hydrostatische Bremsenergierückgewinnung in einem gemeinsamen hydraulischen System zusammengefaßt, wobei hier zwischen hydrostatischem Wandler und Kennungswandler ein Zusatzgetriebe vorhanden und dieser Getriebezug fest, das heißt, nicht schaltbar ist. Dies hat zwar den Vorteil einer kompakten Gesamtanordnung, jedoch auch den Nachteil, daß bei Ausfall einer Komponente beide Systeme in ihrer Funktionsweise beeinträchtigt oder gar vollständig funktionsunfähig sind.

Des weiteren ist aus der EPA-A1 0 047 642 ebenfalls schon ein Kraftfahrzeug mit einem Bremsenergie-Rückgewinnungs-System spezieller Bauart bekannt. Die Antriebseinrichtung für eine Hinterachse umfaßt einen Verbrennungsmotor und ein automatisiert schaltbares Getriebe. Dieses hat eine Eingangswelle und eine Ausgangswelle. An letzterer ist der Hinterachsantriebsstrang angeschlossen. Zwischen dem automatisiert schaltbaren Getriebe und dem Verbrennungsmotor erstreckt sich innerhalb eines eigenen Gehäuses eine Antriebsübertragungseinheit mit mehreren Kupplungen und über diese miteinander kuppel- bzw. entkuppelbaren Antriebswellenteilstücken.

An einem eingangsseitigen Wellenteilstück ist über eine erste Kupplung ein einen ersten Hydrowandler antreibender Getriebezug an- und abkuppelbar. Dann folgt eine Freilauf- bzw. Überholkupplung und eine zweite Kupplung, die dazu dient, das eingangsseitige Wellenteilstück mit einem zweiten Wellenteilstück zu kuppeln. Letzteres ist form- und kraftschlüssig über ein spezielles Anschlußorgan mit der Eingangswelle des automatisiert schaltbaren Getriebes verbunden. Am zweiten Wellenteilstück ist über eine dritte Kupplung ein einen zweiten Hydrowandler antreibender Getriebezug an- und abkuppelbar. Dieser zweite Hydrowandler ist Teil eines Bremsenergie-Rückgewinnungs-Systems. Im Vergleich zum automatisiert schaltbaren Getriebe benötigt die vorerwähnte Antriebsübertragungseinheit etwa doppelte Baulänge und doppelten Bauraum. Das dortige Bremsenergie-Rückgewinnungs-System ist offensichtlich für relativ niedrige hydraulische Drücke ausgelegt, was sich aus der Art der verwendeten Ventile ergibt. Beispielsweise ist dem Hochdruckspeicher ein rein elektromagnetisch betätigbares Schieberventil zur Absperrung vorgeschaltet. Dem Niederdruckspeicher ist überhaupt kein eigenes Ventil vorgeschaltet, das den Druck in ihm stabil halten könnte. Umschaltungen in den Flußrichtungen, die notwendig sind, weil der zweite Hydrowandler nur zwischen Null und Maximum verschwenkbar ist, erfolgen ebenfalls durch elektromagnetisch betätigbare Schieberventile.

Um die beim Bremsen eines Fahrzeugs anfallende kinetische Energie in eine hinreichend große potentielle Speicherenergie umwandeln zu können, sind nach derzeitigen Erkenntnissen Bremsenergie-Rückgewinnungs-Systeme nötig, die auf die Beherrschung von hydraulischen Drücken in der Größenordnung von etwa 400 bar ausgelegt sind. Das heißt, alle Leitungswege, Ventile, der umsetzende Hydrowandler und der Hochdruckspeicher müssen in der Lage sein, diese hohen Öldrücke leckagefrei zu verarbeiten. Solches wäre bei dem bekannten System deshalb nicht möglich, weil mit den dortigen Bauteilen die besagten Drücke nicht beherrschbar wären. Es gibt bis heute kein elektromagnetisch betätigtes Schieberventil, das Drücke von 400 bar sicher und leckagefrei absperren und in der erforderlich kurzen Zeit schalten könnte.

Es ist daher Aufgabe der Erfindung, bei einem Kraftfahrzeug die Antriebseinrichtung und die Einrichtung zur hydrostatischen Bremsenergierückgewinnung so auszubilden, daß ein sicherer Betrieb des Fahrzeugs auch bei Ausfall irgendeiner Komponente der Bremsenergierückgewinnungseinrichtung möglich ist und auch Drücke in der Größenordnung bis 400 bar sicher beherrschbar sind.

Diese Aufgabe ist erfindungsgemäß durch ein Kraftfahrzeug mit den Merkmalen des Anspruchs 1 gelöst.

Durch die erfindungsgemäße Möglichkeit einer vollständigen Abtrennung der hydrostatischen Bremsenergierückgewinnungseinrichtung von der Antriebseinrichtung des Kraftfahrzeuges ist die aufgabengemäße Forderung erfüllbar. Das Kraftfahrzeug ist auch dann betreibbar, wenn Störungen im Speichersystem, sei es auf der hydraulischen Seite als auch auf der elektronischen Seite, auftreten. Andererseits ist das Bremsenergierückgewinnungssystem über die schaltbare Kupplung immer dann für Lade- oder Entladevorgänge des Hochdruckhydrospeichers an den Hinterachsantriebsstrang zuschaltbar, wenn bestimmte Betriebszustände es erlauben. Hierdurch ist mithin auch eine optimal auf den Fahrbetrieb abgestimmte Bremsenergierückgewinnung und Einleitung gespeicherter Energie in den Hinterachsantriebsstrang erzielbar.

Vorteilhafte Einzelheiten der erfindungsgemäßen Lösung sind in den Unteransprüchen gekennzeichnet.

Dabei erweist sich jene Tatsache, daß die Bremsenergierückgewinnungseinrichtung über eine modular aufgebaute Steuereinrichtung verfügt, insofern als sehr vorteilhaft, als jeder der einzelnen Module, wenn aus irgendwelchen Gründen notwendig, leicht und schnell austauschbar ist. Dies erleichtert die Vorratshaltung und verbilligt die Ersatzteilkosten. Außerdem erlaubt dieser modulare Aufbau in vorteilhafter Weise die Anordnung der einzelnen Module dort, wo sie am Fahrzeug am besten unterbringbar sind. Eine solche Flexibilität wäre mit einer größeren Baugruppe nicht erzielbar.

Nachstehend ist die erfindungsgemäße Lösung anhand eines in der Zeichnung dargestellten Ausführungsbeispieles näher erläutert. In der Zeichnung zeigen:

Fig. 1 ein Blockschaltbild der Antriebseinrichtung eines Kraftfahrzeuges und der gesamten Bremsenergierückgewinnungseinrichtung,

Fig. 2 ein Schaltbild des hydraulischen Teils der Bremsenergierückgewinnungseinrichtung nach Fig. 1,

Fig. 3 das Schaltbild gemäß Fig. 2 mit einem Schaltzustand seiner Teile für «Bremsen mit Energiespeicherung»,

Fig. 4 das Schaltbild gemäß Fig. 2 in einer Schaltstellung seiner Teile für «Anfahren und Beschleunigen mit Speicherkraft»,

Fig. 5 das Schaltbild gemäß Fig. 2 mit Eintragungen, die eine erste Funktion des Ölversorgungsblockes verdeutlichen,

Fig. 6 das Schaltbild gemäß Fig. 2 mit Eintragungen, die eine zweite Funktion des Ölversorgungsblockes verdeutlichen, und

Fig. 7 das Schaltbild gemäß Fig. 2 mit Eintragungen, die eine dritte Funktion des Ölversorgungsblockes verdeutlichen.

Bei Kraftfahrzeugen, insbesondere im Stop-And-Go-Verkehr betriebenen Nutzfahrzeugen, wie Stadtlinienbussen, Müllsammelfahrzeugen oder dgl., erweist es sich als zweckmäßig, wegen der häufigen Anfahr- und Bremsvorgänge, die beim Bremsen anfallende Energie rückzugewinnen. Hierzu ist eine Bremsenergierückgewinnungseinrichtung im Fahrzeug vorgesehen, mit der es möglich ist, die beim Bremsen anfallende Energie auf hydrostatischem Weg umzuwandeln, diese Energie zwischenzuspeichern und dem Fahrzeug beim Anfahren wieder zur Verfügung zu stellen. Details dieser Bremsenergierückgewinnungseinrichtung sind nachstehend anhand der Zeichnung erläutert.

Vom Kraftfahrzeug selbst sind dabei nur die für das Verständnis der Erfindung notwendigen Teile dargestellt. Es sind dies der Verbrennungsmotor (1) mit Einspritzpumpe (2), deren Regelstange durch ein Regelgestänge (3) verstellbar ist, an dem ein elektrisches Stellglied (4) angreift, sowie ein elektrisches Stellungsüberwachungsorgan (5), z.B. Potentiometer, angeschlossen sind. Dem Verbrennungsmotor (1) nachgeordnet ist ein Kennungswandler (6), der insbesondere durch ein automatisches Getriebe gebildet ist. Am primären Abtrieb (7) des Kennungswandlers (6) ist der Antriebsstrang (8) der Hinterachse (9) des Kraftfahrzeugs angeschlossen. Mit (10) ist ein Bremspedal und mit (11) ein Fahrpedal bezeichnet, beide angeordnet im Führerstand des Kraftfahrzeuges.

Die Bremsenergierückgewinnungseinrichtung ist als autarkes System ausgebildet, das nur bedarfsweise für Lade- und Entladevorgänge eines Hochdruckhydrospeichers (12) dem Kennungswandler (6) zuschaltbar istlund zwar vermittels einer in Abhängigkeit bestimmter Betriebszustände schaltbaren Kupplung (13), deren eine Seite mit einem Sekundärabtrieb (14) des Kennungswandlers (6) und deren andere Seite mit der Triebachse (15) eines einzigen hier nur notwendigen Hydrowandlers (16) verbunden ist. Der Hydrowandler (16) ist verstellbar und fallweise als Motor oder als Pumpe betreibbar. Die Änderung der Arbeitsweise erfolgt durch Verstellung des Schwenkwinkels. Die Drehrichtung des Hydrowandlers (16) bleibt in allen Betriebszuständen gleich. Der Hydrowandler (16) selbst ist ein käufliches Aggregat bekannter Bauart; dabei kann es sich um die Schrägachsen-, oder Schrägscheiben-, oder Radialkolben-Bauart handeln. Der Hydrowandler (16) ist zwischen Null und einem Maximum verstellbar. Für die Umsteuerung ist der Umsteuerblock (22) vorgesehen.

Als weiteres Teil der Bremsenergierückgewinnungseinrichtung ist ein Niederdruckhydrospeicher (17) vorgesehen. Letzterer und auch der Hochdruckhydrospeicher (12) sind vorzugsweise durch Blasenspeicher oder Kolbenspeicher bekannter Bauart gebildet.

Des weiteren umfaßt die Bremsenergierückgewinnungseinrichtung einen Hydrauliköltank (18) und eine vom Verbrennungsmotor (1) angetriebene Förderpumpe (19) zur Versorgung der hydraulischen Teile. Außerdem verfügt die Bremsenergierückgewinnungseinrichtung über eine modular aufgebaute Steuereinrichtung, die aus elektrohydraulischen und elektronischen Funktionsbaugruppen zusammengesetzt ist. Jede derselben bildet einen Modul, der seiner Funktion entsprechend mit einem oder mehreren der anderen Module verbunden ist.

Im einzelnen handelt es sich dabei um folgende Module, nämlich einen dem Niederdruck-Hydrospeicher (17) zugeordneten Steuerblock (20), einen dem Hochdruck-Hydrospeicher (12) zugeordneten Steuerblock (21), einen Umsteuerblock (22) für den Hydrowandler (16), eine Druckbegrenzungseinheit (23), einen Ölversorgungsblock (24) und einen Leitrechner (25).

Der Leitrechner (25) ist durch einen Mikroprozessor gebildet, dem Eingabeeinheiten und Ausgabeeinheiten zugeordnet sind. Einzelheiten hierzu weiter hinten.

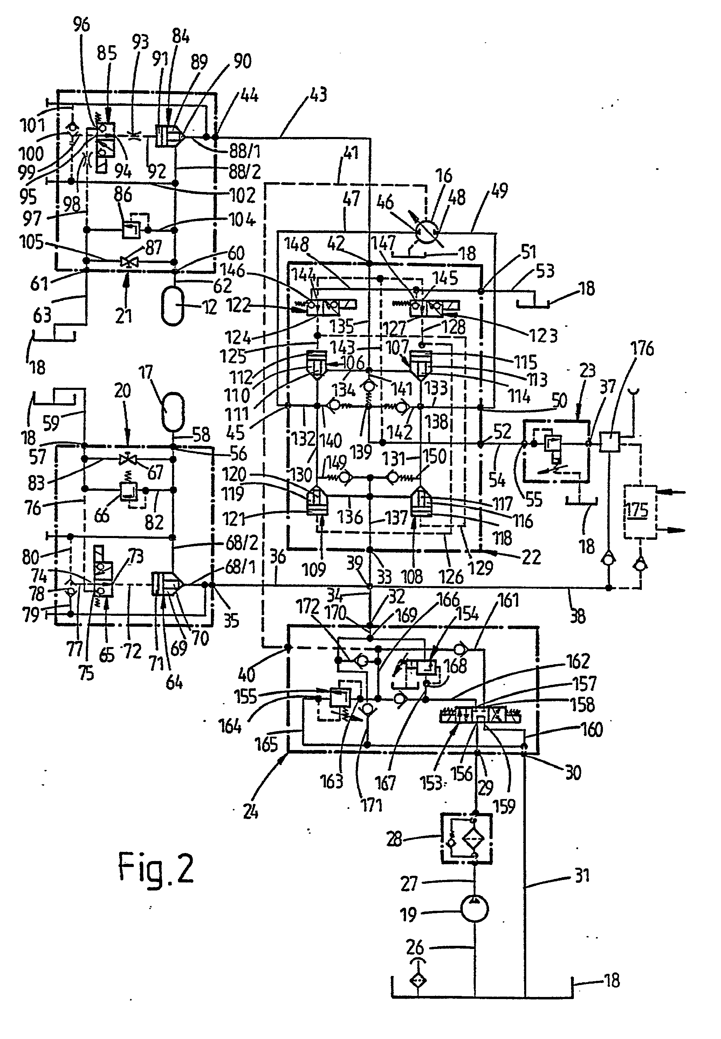

Nachstehend sind anhand von Fig. 2 Details jener Module und deren steuerungsmäßige Verknüpfung dargelegt, die den hydraulischen Teil der Bremsenergierückgewinnungseinrichtung bilden.

Die Förderpumpe (19) steht mit dem Hydrauliköltank (18) über eine Saugleitung (26) in Verbindung und fördert Hydrauliköl über eine Druckleitung (27) mit eingeschaltetem Druckfilter (28) zum Eingang (29) des Ölversorgungsblockes (24). Der Entlastungsausgang (30) des letzteren ist über eine Rücklaufleitung (31) mit dem Hydrauliköltank (18) verbunden. Am Ölversorgungsausgang (32) des Ölversorgungsblockes (24) ist über eine Leitung (34) der Eingang (33) des Umsteuerblockes (22) angeschlossen. Von der Leitung (34) zweigt wiederum eine zum Eingang (35) des Steuerblockes (20) hinführende Leitung (36) ab; außerdem mündet in die Leitung (34) eine vom Ausgang (37) der Druckbegrenzungseinheit (23) abgehende Entlastungsleitung (38) ein. Hierfür ist vorzugsweise eine bei (39) gegebene Verzweigungsstelle vorhanden. Am Steuerausgang (40) des Översorgungsblockes (24) ist über eine Steuerdruckleitung (41) der Hydrowandler (16) angeschlossen, und zwar jene hydraulischen Stellorgane desselben, mit denen eine Schwenkwinkelverstellung durchführbar ist.

Der Hochdruckanschluß (42) des Umsteuerblockes (22) ist über eine Druckleitung (43) mit dem Hochdruckanschluß (44) des Steuerblockes (21) verbunden. Der Arbeitsausgang (45) des Umsteuerblockes (22) ist mit dem Arbeitseingang (46) des Hydrowandlers (16) über eine Leitung (47) verbunden, während der Arbeitsausgang (48) des Hydrowandlers (16) über eine Zuleitung (49) am Arbeitseingang (50) des Umsteuerblockes (22) angeschlossen ist. Letzterer verfügt außerdem über zwei Entlastungsausgänge (51, 52), wobei der eine (51) über eine Entlastungsleitung (53) am Hydrauliköltank (18) und der andere (52) über eine Entlastungsleitung (54) mit dem Eingang (55) der Druckbegrenzungseinheit (23) verbunden ist. Letztere besteht aus einem Druckbegrenzungsventil, das auf einen Druck eingestellt wird, der dem gewünschten oder möglichen Maximumspeicherdruck im Hochdruckhydrospeicher (12) entspricht. Das heißt, Öl mit höheren Drücken wird zum Hydrauliköltank (18) hin abgesteuert.

Der dem Niederdruckhydrospeicher (17) zugeordnete Steuerblock (20) verfügt außer dem Niederdruckanschluß (35) über zwei weitere Anschlüsse (56, 57), wobei der Anschluß (56) über eine Leitung (58) mit dem Niederdruckhydrospeicher (17) und der Anschluß (57) über eine Entlastungsleitung (59) mit dem Hydrauliköltank (18) in Verbindung steht.

Ähnlich aufgebaut wie der Steuerblock (20) ist der dem Hochdruckhydrospeicher (12) zugeordnete Steuerblock (21). Dieser besitzt außer seinem Hochdruckanschluß (44) zwei weitere Anschlüsse (60, 61), wobei der Anschluß (60) über eine Druckleitung (62) mit dem Hochdruckhydrospeicher (12) und der Anschluß (61) über eine Entlastungsleitung (63) mit dem Hydrauliköltank (18) in Verbindung steht.

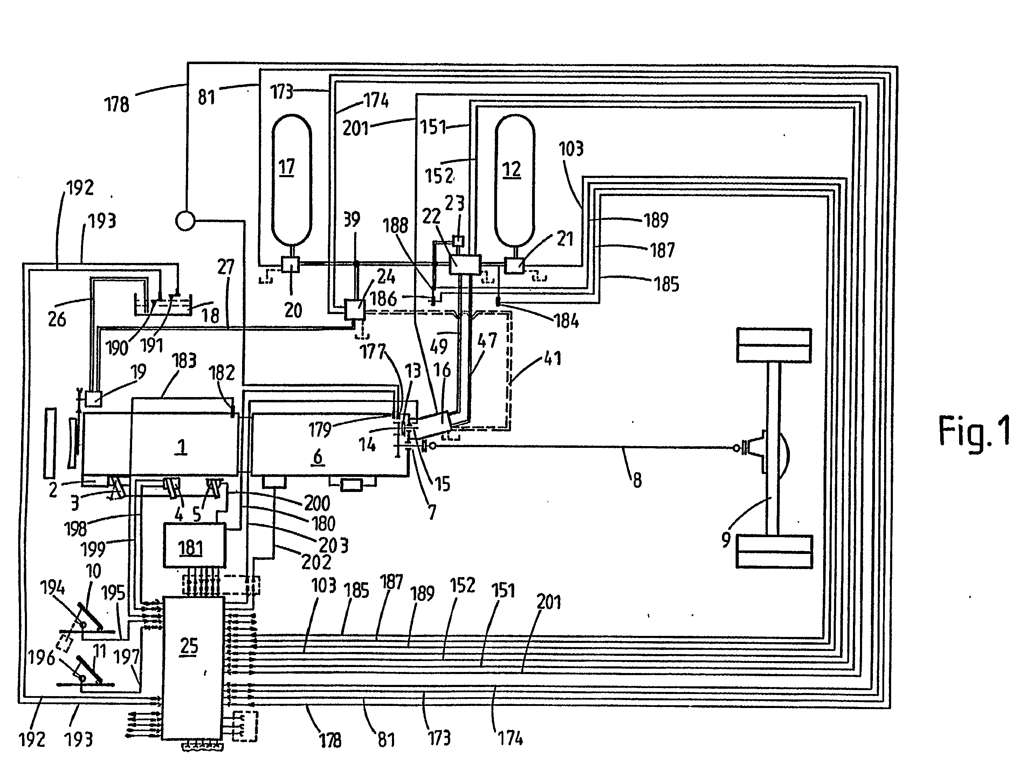

Im einzelnen weist der Steuerblock (20) ein Durchlaß- und Absperrventil (64), ein letzterem zugeordnetes elektronisch betätigbares, in einen hydraulischen Steuerkreis eingeschaltetes 3/2-Wege-Schaltventil (65), ein Druckbegrenzungsventil (66) und eine Absperrdrossel (67) auf. Das Durchlaß- und Absperrventil (64) dient zur Auf- und Zusteuerung einer zwischen den Anschlüssen (35 und 56) verlaufenden und aus zwei Teilen (68/1, 68/2) bestehenden Leitung (68), wobei deren Auf- und Zusteuerung durch ein in einem Durchlaßraum (69) arbeitendes Ventilglied (70) erfolgt, dem ein Druckraum (71) zugeordnet ist, über den es bei Druckanlegung in Schließrichtung druckbeaufschlagbar ist. Die Druckbe- und Entlastung erfolgt über eine Verbindungsleitung (72) zwischen Druckraum (71) und Ausgangsanschluß (73) des 3/2-Wege-Schaltventiles (65) und je nach Schaltstellung über den Druckeingangsanschluß (74) bzw. den Druckentlastungsanschluß (75). Letzterer steht über eine zum Anschluß (57) hinführende Entlastungsleitung (76) mit dem Hydrauliköltank (18) in Verbindung. Der hydraulische Steuerdruck am Druckeingangsanschluß (74) ergibt sich vom hydraulischen Steuerkreis her, wobei der Druckeingangsanschluß (74) über eine Zuleitung (77) mit dem Ausgang eines Wechselventiles (78) in Verbindung steht, dessen einer Eingang über eine Zuleitung (79) mit dem vor dem Durchlaß- und Absperrventil (64) liegenden Teil (68/1) der Leitung (68), dessen anderer Eingang mit dem nach Durchlaß- und Absperrventil (64) liegenden Teil (68/2) der Leitung (68) über eine Zuleitung (80) in Verbindung steht. Die Steuerung des 3/2-Wege-Schaltventiles (65) erfolgt vom Leitrechner (25) aus über eine entsprechende elektrische Steuerleitung (81) – siehe Fig. 1. Das Druckbegrenzungsventil (66) ist in eine Verbindungsleitung (82) eingeschaltet, die zwischen Entlastungsleitung (76) und dem nach Durchlaß- und Absperrventil (64) liegenden Teil (68/2) der Leitung (68) verlegt ist. Parallel hierzu ist eine Leitung (83) mit der Absperrdrossel (67) verlegt. Das Druckbegrenzungsventil (66) wird auf einen Druck eingestellt, der dem gewünschten Maximumdruck im Niederdruckhydrospeicher (17) entspricht. Mit Hilfe der normalerweise geschlossenen Absperrdrossel (67) ist eine Entleerung des Niederdruckhydrospeichers (17) durchführbar. Dabei ist beispielsweise in Reparaturfällen durch vollständiges Öffnen ein Ölablassen aus dem Niederdruckhydrospeicher (17) und allen strömungsmäßig nach dem Durchlaß- und Absperrventil (64) liegenden Leitungswegen (68/2, 80, 82, 83) zum Hydrauliköltank (18) zurück möglich.

Bauteilmäßig zwar gleich ausgebildet wie der Steuerblock (20), jedoch auf die Beherrschung höherer Drücke ausgelegt ist der Steuerblock (21). Dieser weist mithin auch ein Durchlaß- und Absperrventil (84), ein letzterem zugeordnetes elektrisch betätigbares, ebenfalls in einem hydraulischen Steuerkreis eingeschaltetes 3/2-Wege-Schaltventil (85), ein Druckbegrenzungsventil (86) sowie eine Absperrdrossel (87) auf. In diesem Fall dient das Durchlaß- und Absperrventil (84) zur Auf- und Zusteuerung einer zwischen den Anschlüssen (44) und (60) verlaufenden Druckleitung (88) mit Teilen (88/1 und 88/2), wobei deren Auf- und Zusteuerung auch hier durch ein in einem Durchlaßraum (89) arbeitendes Ventilglied (90) erfolgt, dem ein Druckraum (91) zugeordnet ist, über den es bei Druckanlegung in Schließrichtung beaufschlagbar ist. Die Druckbe- und Entlastung erfolgt dabei über eine Verbindungsleitung (92) mit eingeschalteter Drosselstelle (93) zwischen Druckraum (91) und Ausgangsanschluß (94) des 3/2-Wege-Schaltventiles (85), und je nach Schaltstellung desselben über dessen Druckeingangsanschluß (95) bzw. dessen Druckentlastungsanschluß (96). Letzterer steht über eine Entlastungsleitung (97) mit dem Anschluss (61) und somit auch mit dem Hydrauliköltank (18) in Verbindung.

In der Entlastungsleitung (97) ist eine Drossel (98) eingebaut. Der hydraulische Steuerdruck am Druckeingangsanschluß (95) ergibt sich auch hier von dem steuerblockinternen hydraulischen Steuerkreis her, wobei der Druckeingangsanschluß (95) über eine Zuleitung (99) mit dem Ausgang eines Wechselventiles (100) in Verbindung steht, dessen einer Eingang über eine Zuleitung (101) mit dem vor Durchlaß- und Absperrventil (84) liegenden Teil (88/1) der Leitung (88), dessen anderer Eingang mit dem nach Durchlaß- und Absperrventil (84) liegenden Teil (88/2) der Leitung (88) über eine Zuleitung (102) in Verbindung steht. Die Steuerung dieses 3/2-Wege-Schaltventiles (85) erfolgt ebenfalls vom Leitrechner (25) aus über eine entsprechende elektrische Steuerleitung (103), siehe Fig. 1. Das Druckbegrenzungsventil (86) ist in eine Verbindungsleitung (104) eingeschaltet, die zwischen Entlastungsleitung (97) und dem nach Durchlaß- und Absperrventil (84) liegenden Teil (88/2) der Leitung (88) verlegt ist. Parallel hierzu ist auch hier eine Leitung (105) mit der Absperrdrossel (37) verlegt. In diesem Anwendungsfall wird das Druckbegrenzungsventil (86) auf einen Druck eingestellt, der dem zuläßigen Maximumdruck im Hochdruckhydrospeicher (12) entspricht. Öl mit höherem Druck wird mithin zum Hydrauliköltank (18) zurückgeleitet. Die Absperrdrossel (87), die normalerweise geschlossen ist, dient zur Entleerung des Hochdruckhydrospeichers (12); dabei ist durch vollständiges Öffnen ein Ölablassen aus dem Hochdruckhydrospeicher (12) und allen strömungsmäßig nach dem Durchlaß- und Absperrventil (84) gegebenen Leitungswegen (88/2, 102, 104, 97) zurück zum Hydrauliköltank (18) möglich.

Der Umsteuerblock (22) für den Hydrowandler (16) weist vier paarweise elektronisch-hydraulisch gesteuerte Durchlaß- und Absperrventile (106, 107, 108, 109) auf. Jedes der vier Durchlaß- und Absperrventile weist ein in einem Durchlaßraum arbeitendes Ventilglied sowie einen Druckraum zur Be- und Entlastung desselben auf. Im Zusammenhang mit dem Durchlaß- und Absperrventil (106) ist dessen Durchlaßraum mit (110), dessen Ventilglied mit (111) und dessen Druckraum mit (112) bezeichnet. Beim Durchlaß- und Absperrventil (107) ist dessen Durchlaßraum mit (113), dessen Ventilglied mit (114) und dessen Druckraum mit (115) bezeichnet. Beim Durchlaß- und Absperrventil (108) sind dessen Durchlaßraum mit (116), dessen Ventilglied mit (117) und dessen Druckraum mit (118) bezeichnet. Beim Durchlaß- und Absperrventil (109) sind dessen Durchlaßraum mit (119), dessen Ventilglied mit (120) und dessen Druckraum mit (121) bezeichnet. Für die paarweise Steuerung der Durchlaß- und Absperrventile sind zwei 3/2-Wege-Schaltventile (122 und 123) vorgesehen. Am Ausgangsanschluß (124) des 3/2-Wege-Schaltventiles (122) sind über eine Verbindungsleitung (125) der Druckraum (112) des Durchlaß- und Absperrventiles (106) sowie über eine Verbindungsleitung (129) der Druckraum (118) des Durchlaß- und Absperrventiles (108) angeschlossen. Am Ausgangsanschluß (127) des 3/2-Wege-Schaltventiles (123) dagegen sind über eine Verbindungsleitung (128) der Druckraum (115) des Durchlaß- und Absperrventiles (107) sowie über eine Verbindungsleitung (126) der Druckraum (121) des Durchlaß- und Absperrventiles (109) angeschlossen. Des weiteren sind die absperrbaren Einlässe der beiden Durchlaß und Absperrventile (106 und 109) über eine Leitung (130) miteinander verbunden, während die absperrbaren Einlässe der beiden Durchlaß- und Absperrventile (107 und 108) über eine Leitung (131) miteinander in Verbindung stehen. Die Leitung (130) steht über eine Abzweigung (132) mit dem Arbeitsausgang (45) des Umsteuerblockes (22) und damit über die Leitung (47) mit dem Arbeitseingang (46) des Hydrowandlers (16) in Verbindung. Die Leitung (131) steht über eine Abzweigung (133) mit dem Arbeitseingang (50) des Umsteuerblockes (22) und damit über die Zuleitung (49) mit dem Arbeitsausgang (48) des Hydrowandlers (16) in Verbindung. Des weiteren sind die Durchlaßräume (110 und 113) der beiden Durchlaß- und Absperrventile (106 und 107) über eine Leitung (134) miteinander verbunden. Von dieser Leitung (134) führt eine Abzweigung (135) zum Hochdruckanschluß (42) des Umsteuerblockes (22) und steht damit über die Druckleitung (43) mit dem Steuerblock (21) sowie dem an diesem angeschlossenen Hochdruckhydrospeicher (12) in Verbindung. Eine weitere Leitung (136) verbindet die Durchlaßräume (116 und 119) der beiden Durchlaß- und Absperrventile (108 und 109).

Diese Leitung (136) steht über eine Abzweigung (137) mit dem Steuereingang (33) des Umsteuerblockes (22) und somit mit dem Ölversorgungsblock (24) sowie dem Steuerblock (20) in Verbindung. Des weiteren ist umsteuerblockintern eine zum Entlastungsausgang (52) hinführende Leitung (138) vorgesehen, in die drei von den Leitungen (130, 131, und 134) abzweigende und infolge eines jeweils in sie eingebauten Rückschlagventiles nur in Richtung zum Anschlußort (139) durchläßige Absteuerleitungen (140, 141, 142) einmünden. Von dieser Leitung (138) ausgehend werden die beiden 3/2-Wege-Schaltventile (122 und 123) mit hydraulischem Druck versorgt, und zwar über eine Druckleitung (143), die sich in zwei Äste verzweigt, von denen der eine zum Druckeingangsanschluß (144) des 3/2-Wege-Schaltventiles (122) und der andere zum Druckeingangsanschluß (145) des 3/2-Wege-Schaltventiles (123) hinführt. Der Druckentlastungsanschluß (146) des 3/2-Wege-Schaltventiles (122) und der Druckentlastungsanschluß (147) des 3/2-Wege-Schaltventiles (123) sind über eine gemeinsame Entlastungsleitung (148) am Entlastungsausgang (51) des Umsteuerblockes (22) angeschlossen und stehen damit mit dem Hydrauliköltank (18) in Verbindung. Darüberhinaus steht die Leitung (136) mit den beiden Leitungen (130 und 131) über Absteuerleitungen (149, 150) mit jeweils zu diesen hin durchläßigen Rückschlagventilen in Verbindung.

Die beiden 3/2-Wege-Schaltventile (122 und 123) sind jeweils über eine Steuerleitung (151 bzw. 152) – siehe Fig. 1 – mit dem Leitrechner (25) verbunden.

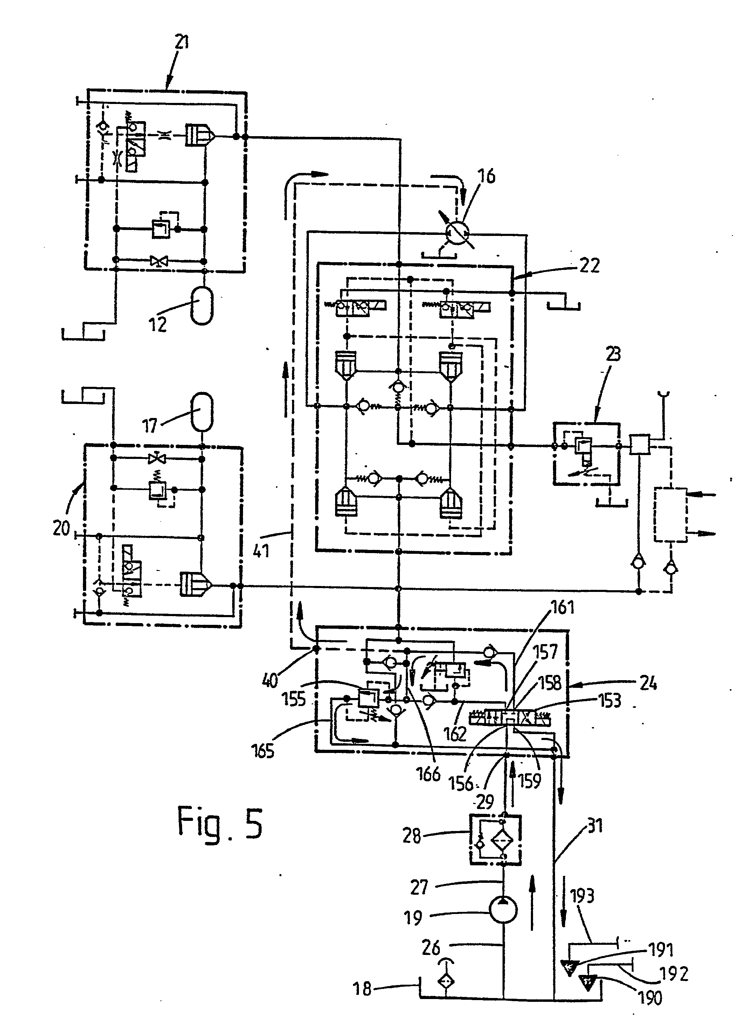

Der Ölversorgungsblock (24) weist ein elektrisch ansteuerbares 4/3-Wege-Schaltventil (153), ein Druckzuschaltventil (154) sowie ein Niederdruckbegrenzungsventil (155) auf. Das 4/3-Wege-Schaltventil (153) hat einen mit dem Eingang (29) des Ölversorgungsblockes (24) verbundenen Eingangsanschluß (156) und drei Ausgangsanschlüsse, nämlich einen ersten Druckausgangsanschluß (157), einen zweiten Druckausgangsanschluß (158) und einen Entlastungsausgangsanschluß (159). Letzterer ist mit dem Entlastungsausgang (30) des Ölversorgungsblockes (24) über einen Kanal (160) verbunden. Der zweite Druckausgangsanschluß (158) ist über eine Leitung (161) mit nur in Förderrichtung durchläßigem Rückschlagventil mit dem Steuerausgang (40) des Ölversorgungsblockes verbunden. Der erste Druckausgangsanschluß (157) dagegen ist über eine Leitung (162), in der ebenfalls ein nur in Förderrichtung durchläßiges Rückschlagventil eingeschaltet ist, mit dem Eingang (163) des Niederdruckbegrenzungsventiles (155) verbunden. Dessen Ausgang (164) wiederum ist über eine Leitung (165) mit dem Entlastungsausgang (30) des Ölversorgungsblockes (24) verbunden. Zwischen den beiden Leitungen (161 und 162) besteht strömungsmäßig jeweils nach dem Rückschlagventil eine Strömungsverbindung, hergestellt durch eine Leitung (166); des weiteren steht der strömungsmäßig vor dem Rückschlagventil liegende Teil der Leitung (162) über eine Zulaufleitung (167) mit dem Eingang (168) des Druckzuschaltventiles (154) in Verbindung, dessen Ausgang (169) über einen Kanal (170) mit dem Ölversorgungsausgang (32) des Ölversorgungsblockes (24) in Verbindung steht. An diesem Kanal (170) ist außerdem eine weitere, von der Leitung (165) abzweigende und ein Strömung nur in Richtung des Kanales (170) durchlassendes Rückschlagventil aufweisende Leitung (171) angeschlossen. Zwischen der Leitung (171) und der Leitung (166) ist ein Kanal (172) mit nur in dieser Richtung durchläßigem Rückschlagventil gegeben. Mit dem 4/3-Wege-Schaltventil (153) sind drei Schaltzustände möglich, wobei im ersten Schaltzustand eine direkte Verbindung zwischen den Anschlüssen (156 und 157) einerseits sowie den Anschlüssen (158 und 159) andererseits gegeben ist, wobei in der zweiten Schaltstellung die beiden Anschlüsse (156 und 159) kurzgeschlossen sind und wobei in der dritten Schaltstellung die Anschlüsse (156 und 158) einerseits sowie die Anschlüsse (157 und 159) andererseits in Verbindung stehen. Die beiden elektrischen Betätigungsorgane des 4/3-Wege-Schaltventiles sind über je eine Steuerleitung (173 bzw. 174) – siehe Fig. 1 – mit dem Leitrechner (25) verbunden. Die Wirkungsweise des Ölversorgungsblockes (24) ist weiter hinten anhand der Figuren 5 bis 7 näher erläutert.

Mit (175) sind ein Wärmetauscher und mit (176) ein Umschaltorgan bezeichnet. Durch letzteres ist die Entlastungsleitung (38) entweder durch den Wärmetauscher (175) hindurchführend oder als Bypaß an diesem vorbeiführend schaltbar. Die Leitungsführung durch den Wärmetauscher (175) ist nur beim Retarder (Dauerbrems-)Betrieb vorgesehen, der mit der Bremsenergierückgewinnungseinrichtung ebenfalls durchführbar ist. Einzelheiten hierzu weiter hinten.

Der Leitrechner (25) steuert per Programm die Lade- und Entladeoperationen des Hochdruckhydrospeichers (12) auf der Basis ihm von Sensoren gelieferten Betriebszustandsistwerten durch entsprechende Signalgabe an die elektrischen Betätigungsorgane der schaltbaren Kupplung (13) und der Ventile (65, 85, 122, 123 und 153) in den Funktionsblöcken (20, 21, 22, 24). Folgende Sensoren sind für die diesbezügliche Steuerung wenigstens vorgesehen:

a) ein Sensor (177), der die Abtriebsdrehzahl der Triebachse (15) erfaßt und über eine Meldeleitung (178) an den Leitrechner (25) weiterleitet,

b) ein Sensor (179), der die Drehzahl des Sekundärabtriebes (14) erfaßt und über eine Meldeleitung (180) an eine mit dem Leitrechner in Verbindung stehende Getriebeelektronik (181) weiterleitet,

c) ein Sensor (182), der die Drehzahl des Verbrennungsmotors (1) erfaßt und über eine Meldeleitung (183) an den Leitrechner (25) meldet,

d) ein Drucksensor (184), der den hydraulischen Hochdruck erfaßt und über eine Meldeleitung (185) dem Leitrechner (25) zuführt,

e) ein Sensor (186), der den systeminternen Niederdruck erfant und über eine Meldeleitung (187) an den Leitrechner (25) liefert,

f) ein Temperaturgeber (183), der die Temperatur im Niederdruckgebiet des Systems nach der Druckbegrenzungseinheit (23) erfaßt und über eine Meldeleitung (189) in den Leitrechner (25) meldet,

g) ein Minimumfüllstandsniveaugeber (190) und ein Maximumfüllstandsniveaugeber (191) im Hydrauliköltank (18), die den jeweiligen Füllstand über eine Meldeleitung (192 bzw. 193) an den Leitrechner (25) melden.

Mit dem Bremspedal (10) ist ein Geber (194) verbunden, der eine Pedalstellung über eine Meldeleitung (195) in den Leitrechner (25) meldet. In ähnlicher Weise ist auch am Fahrpedal (11) ein Geber (196) angeschlossen, der eine Fahrpedalstellung über eine Meldeleitung (197) in den Leitrechner meldet. Am Leitrechner (25) ist des weiteren das Stellglied (4) für das Regelgestänge (3) angeschlossen, welches Stellglied (4) seine Stellbefehle über die Steuerleitung (198) bekommt und die gegebenen Stellungsistwerte über die Meldeleitung (199) wieder zum Leitrechner (25) zurückmeldet. Das Potentiometer (5) liefert der Stellung des Regelgestänges (3) entsprechende Signale über eine Meldeleitung (200) in die Getriebesteuerelektronik (181).

Mit dem Leitrechner (25) ist des weiteren über eine Steuerleitung (201) die Einrichtung für die Schwenkwinkelverstellung des Hydrowandlers (16) verbunden. Vom Leitrechner (25) aus werden außerdem über die Steuerleitung (202) Steuerbefehle für die Einstellung bzw. Verstellung des Kennungswandlers (6) sowie über die Steuerleitung (203) Steuerbefehle für das Schließen bzw. Unterbrechen der schaltbaren Kupplung (13) abgegeben.

In den Leitrechner (25) können weitere hier der nicht näher erläuterte Betriebszustandsistwerte von entsprechenden Sensoren gemeldet werden. Da diese aber für das Verständnis nicht zwingend notwendig sind, sei auf deren Nennung hier verzichtet.

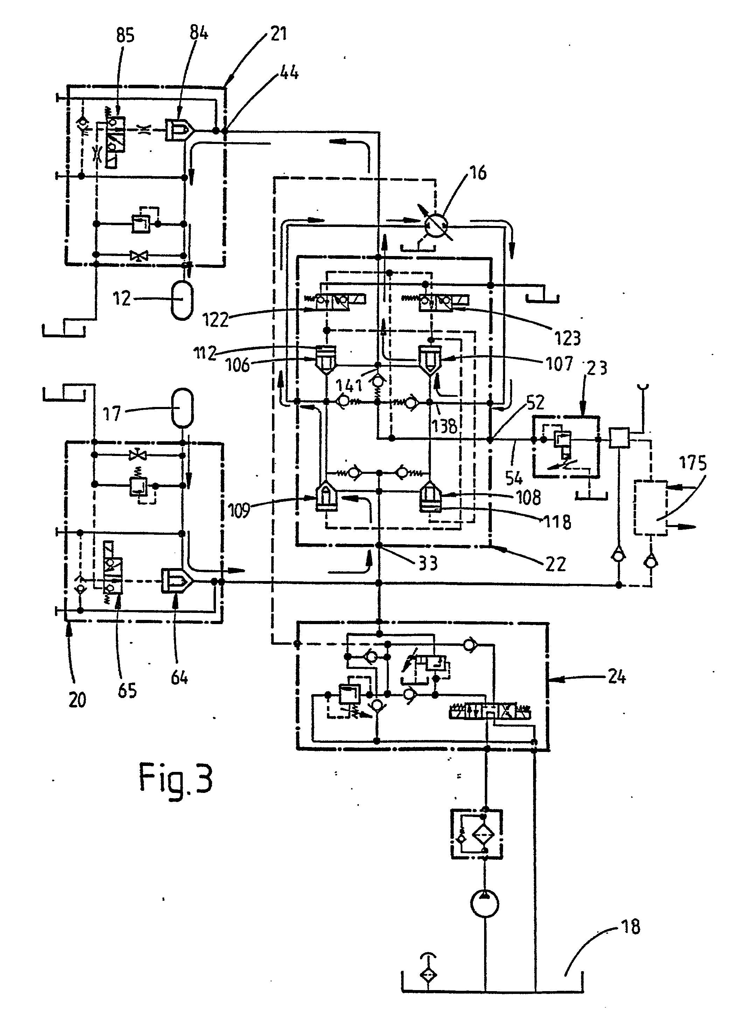

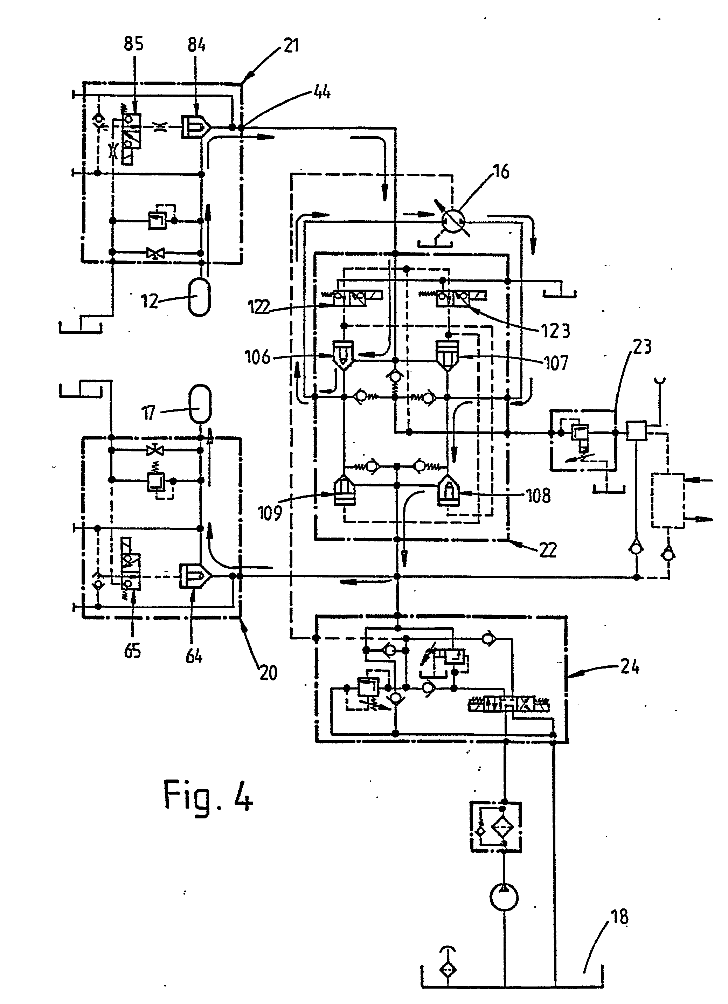

Nachstehend ist die Funktion der erfindungsgemäßen Bremsenergierückgewinnungseinrichtung näher erläutert. Unter Zuhilfenahme von Fig. 3 ist dabei der Vorgang «Bremsen mit Energiespeicherung» und unter Zuhilfenahme von Fig. 4 ein Vorgang «Anfahren und Beschleunigen mit Speicher» dargestellt. In den Figuren 3 und 4 sind der Übersichtlichkeit wegen nur mehr die für das Verständnis unbedingt erforderlichen Bezugszeichen eingetragen.

Beim Bremsen des Kraftfahrzeuges fällt Energie an. Diese kinetische Fahrzeugenergie wird in potentielle Energie umgewandelt und im Hochdruckhydrospeicher (12) zwischengespeichert. Sofern letzterer noch nicht mit dem zulässigen Höchstdruck bela-

stet ist, werden vom Leitrechner, dem dieser Zustand gemeldet ist, entsprechende Befehle an die angeschlossenen Organe abgegeben, wobei zunächst die Kupplung (13) geschlossen wird und somit die Bremsenergierückgewinnungseinrichtung mit dem Hinterachsantriebsstrang (8) in Wirkverbindung steht. Zeitlich versetzt oder gleichzeitig mit diesem Vorgang werden vom Leitrechner (25) Steuerimpulse an die beiden 3/2-Wege-Schaltventile (122 und 123) im Umsteuerblock (22) gegeben, wonach sich das 3/2-Wege-Schaltventil (122) in einer Schaltstellung befindet, in der Druck in den Druckräumen (112 und 118) der beiden angeschlossenen Durchlaß- und Absperrventile (106 und 198) angelegt ist und diese sich damit in Sperrstellung befinden, während sich das 3/2-Wege-Schaltventil (123) in einem Schaltzustand befindet, in dem die Druckräume der beiden angeschlossenen Durchlaß und Absperrventile (107 und 109) druckentlastet, letztere damit geöffnet sind.

Danach oder auch gleichzeitig mit diesem Vorgang wird das 3/2-Wege-Schaltventil (65) im Steuerblock (20) in eine solche Schaltstellung gebracht, daß der Druckraum des angeschlossenen Durchlaß- und Absperrventiles (64) druckentlastet und damit letzteres geöffnet ist. Ab diesem Zeitpunkt kann von dem beim Bremsvorgang als Pumpe arbeitenden Hydrowandler (16) Öl aus dem Niederdruckhydrospeicher (17) in Richtung des Steuerblockes (21) gepumpt werden. Sobald am Hochdruckanschluß (44) ein Druck erreicht ist, der mindestens dem im Hochdruckhydrospeicher (12) herrschenden Druck entspricht, was dem Leitrechner (25) signalisiert ist, dann wird von letzterem auch das 3/2-Wege-Schaltventil (85) so gesteuert, daß der Druckraum des angeschlossenen Durchlaß- und Absperrventiles (84) druckentlastet und letzteres damit geöffnet wird. Dann kann die vom Hydrowandler (16)⁻ zugepumpte Ölmenge in den Hochdruckhydrospeicher (12) eingeleitet werden. Der Ölfluß ist in Fig. 3 durch Pfeile eingetragen. Falls der Druck in der nun durchgeschalteten Förderstrecke ein in der Druckbegrenzungseinheit (23) eingestelltes Niveau übersteigt, wird Öl über die Leitungen (141 und 138) zum Entlastungsausgang (52) des Umsteuerblockes (22) und von diesem über die Entlastungsleitung (54) und die Druckbegrenzungseinheit (23) abgesteuert.

Wenn der Hochdruckhydrospeicher (12) voll ist, was dem Leitrechner (25) signalisiert wird, dann werden durch Befehle des letzteren die beiden 3/2-Wege-Schaltventile (65, 85) wieder in Schaltposition gebracht, in denen die angeschlossenen Durchlaß- und Absperrventile (64, 84) wieder druckbeaufschlagt und damit wieder in Absperrposition überführt sind. Falls danach der Bremsvorgang des Fahrzeuges noch nicht abgeschlossen ist, dann kann der Hydrowandler (16) in Verbindung mit den anderen noch in gleicher Weise geschalteten Ventilen des Umsteuerblockes (22) im Retarderbetrieb als hydrostatische Dauerbremse arbeiten. Dabei pumpt der Hydrowandler (16) das im Kreislauf befindliche Öl ausgehend vom Eingang (33) über die nach wie vor offenen Schaltstrecken des Umsteuerblockes (22) sowie die Druckbegrenzungseinheit (23) und den jetzt zugeschalteten Wärmetauscher (175) zum Steuereingang zurück. Für den Fall, daß der Retarderbetrieb des Hydrowandlers (16) nicht mehr erforderlich ist, wird die Verbindung des letzteren zum Antriebsstrang (8) des Fahrzeugs durch Öffnen der Kupplung (13) unterbrochen.

Unter Zuhilfenahme von Fig. 4 ist nachstehend der Vorgang «Anfahren und Beschleunigen des Kraftfahrzeuges durch Speicherkraft» beschrieben. Wenn vom Fahrpedal (11) ein Anfahrbefehl an den Leitrechner (25) signalisiert wird und diesem auch ein ausreichender Speichergrad im Hochdruckhydrospeicher (12) signalisiert wird, dann werden zunächst die beiden 3/2-Wege-Schaltventile (122, 123) im Umsteuerblock (22) derart angesteuert, daß die Druckräume der beiden vom 3/2-Wege-Schaltventil (122) gesteuerten Durchlaß- und Absperrventile (106 und 108) druckentlastet und letztere damit geöffnet werden, während die Druckräume der beiden vom 3/2-Wege-Schaltventil (123) gesteuerten Durchlaß- und Absperrventile (107 und 109) druckbelastet und damit letztere geschlossen werden. Nach diesem Vorgang erfolgt ein Öffnen des Durchlaß- und Absperrventiles (84) durch entsprechende Ansteuerung des 3/2-Wege-Schaltventiles (85) im Steuerblock (21) sowie eine Öffnung des Durchlaß- und Absperrventiles (64) durch entsprechende Ansteuerung des 3/2-Wege-Schaltventiles (65) im Steuerblock (20). Nach Schließung der Kupplung (13) durch einen entsprechenden Befehl vom Leitrechner (25) ist der Hydrowandler (16) nunmehr in der Lage, als Motor arbeitend die vom Hochdruckhydrospeicher (12) jetzt wieder freigegebene und ihm über die durchgeschalteten Leitungswege zugeführte potentielle Energie in kinetische Energie zum Antrieb des Kraftfahrzeuges umzuwandeln, wobei diese Energie über den Kennungswandler (6) an den Hinterachsantriebsstrang (8) des Fahrzeuges abgegeben wird. Gleichzeitig wird bei diesem Vorgang über den umsteuerblockintern durchgeschalteten Leitungsweg der Niederdruckhydrospeicher (17) wieder bis zu einem bestimmten vorgegebenen Nenndruck rückgeladen. Die Ölflüsse, welche während der vorbeschriebenen Vorgänge stattfinden, sind in Fig. 4 durch entsprechende Pfeile angegeben.

Gesetzt den Fall, der Hochdruckhydrospeicher (12) war vor dem Entladevorgang vollständig gefüllt, dann ist mit der während des Entladevorganges vom Hochdruckhydrospeicher (12) abgebbaren und über den Hydrowandler (16) umwandelbaren Energie ein Anfahren und Beschleunigen des Kraftfahrzeuges bis zu einer Geschwindigkeit von etwa 40 bis 50 km/h ohne Zuhilfenahme der Brennkraftmaschinenenergie möglich. Hierdurch wird ersichtlich, daß mit der erfindungsgemäßen Bremsenergierückgewinnungseinrichtung die Brennkraftmaschinenenergie des Kraftfahrzeuges erst relativ spät und im wesentlichen für den sich an den Anfahrvorgang anschließenden Geschwindigkeitsbereichsbetrieb benötigt wird, was eine ganz erhebliche Kraftstoffeinsparung und damit Betriebskostenreduzierung erbringt.

Nachstehend sind anhand der Figuren 5 bis 7 die drei Funktionen des Ölversorgungsblockes (24) dargelegt. Jede der drei Funktionen ist durch eine entsprechende Schaltstellung des 4/3-Wege-Schaltventiles (153) markiert. Es sei darauf hingewiesen, daß in den Fig. 5 bis 7 auch nur noch die für das Verständnis notwendigen Bezugszeichen eingetragen, die anderen dagegen der Übersichtlichkeit wegen weggelassen sind.

Eine erste Funktion des Ölversorgungsblockes (24) besteht darin, einen hinreichenden Stelldruck im Hydrowandler (16) zum Verstellen des Verschwenkwinkels sicherzustellen. Zu diesem Zweck wird das 4/3-Wege-Schaltventil (153) durch einen entsprechenden Befehl des Leitrechners (25) in eine Schaltstellung gebracht, in der der Eingangsanschluß (156) mit dem zweiten Druckausgangsanschluß (158) in Verbindung steht, so daß von der Förderpumpe (19) gefördertes Hydrauliköl über die ölversorgungsblockinterne Leitung (161) sowie die am Steuerausgang (40) angeschlossene externe Steuerdruckleitung (41) zur Verstelleinrichtung des Hydrowandlers (16) förderbar ist. Dieser Förderweg ist in Figur 5 mit Pfeilen eingetragen. Sobald sich im vorgeschilderten, durchgeschalteten Förderweg ein Druck aufbaut, der über jenen am Niederdruckbegrenzungsventil (155) eingestellten Druck hinausgeht, dann wird das in die Leitung (161) geförderte Hydrauliköl über die Leitung (166) und den nach Rückschlagventil liegenden Teil der Leitung (162) über das Niederdruckbegrenzungsventil (155) sowie die ausgangs desselben anschließende Leitung (165) und die Rücklaufleitung (31) zurück zum Hydrauliköltank (18) abgesteuert. Auch dieser Absteuerweg ist in Figur 5 durch entsprechende Pfeile markiert.

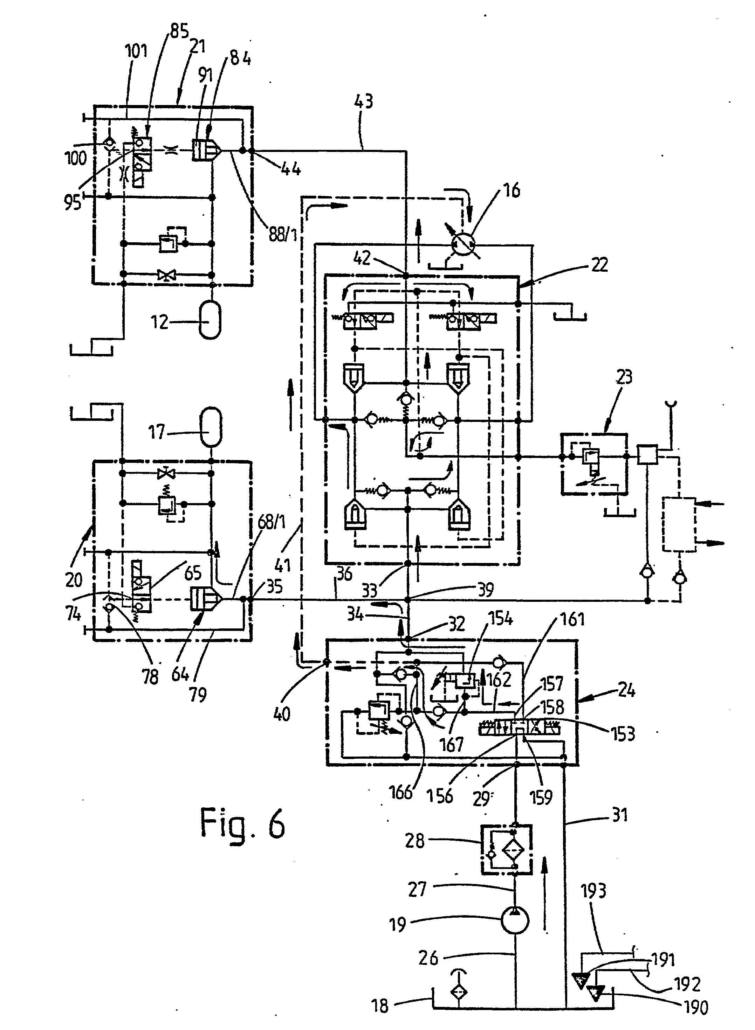

Anhand von Figur 6 ist die zweite Funktion des Ölversorgungsblockes (24) beschrieben. Dabei ist vorauszuschicken, daß alle Leckagen der in den Blöcken (20, 21, 23, 24) gegebenen Hydraulikelemente in den Hydrauliköltank (18) rückgeleitet werden. Steigt der Füllstand in diesem über ein bestimmtes Niveau, was durch den Maximumfüllstandsniveaugeber (191) über die Meldeleitung (193) dem Leitrechner (25) signalisierbar ist, dann wird von letzterem ein Befehl an das 4/3-Wege-Schaltventil (153) abgegeben und dieses dadurch in eine Schaltstellung gebracht, in der dessen Eingangsanschluß (156) in Verbindung mit dem ersten Druckausgangsanschluß (157) steht. In dieser Schaltstellung ist der Ölversorgungsblock (24) in der Lage, außerhalb desselben liegenden Leitungswegen aufgrund von Leckagen fehlendes Hydrauliköl zu ergänzen und außerdem den Stelldruck im Hydrowandler (16) sicherzustellen. Dabei wird von der Förderpumpe (19) über die durchgeschaltete Schaltstrecke (156–157) im 4/3-Wege-Schaltventil (153) Hydrauliköl in die angeschlossene Leitung (162) gefördert. Von dort aus gelangt das zur Nachfüllung des Leitungssystems erforderliche Öl über die vor Rückschlagventil abzweigende Zulaufleitung (167) und das Druckzuschaltventil (154) zum Ölversorgungsausgang (32) des Ölversorgungsblockes (24) und von dort an die angeschlossenen Leitungen zu den Funktionsblöcken. Über die Leitung (36) beispielsweise gelangt das zugeführte Hydrauliköl in den Steuerblock (20) und in diesem über die vom Leitungsteil (68/1) abzweigende Zuleitung (79) und das Wechselventil (78) zum Druckeingangsanschluß (74) des 3/2-Wege-Schaltventiles (65), so daß die Druckbeaufschlagung des angeschlossenen Durchlaß- und Absperrventiles (64) sichergestellt ist. Des weiteren gelangt Hydrauliköl über den Eingang (33) in den Umsteuerblock (22). In diesem können durch entsprechende Befehle vom Leitrechner (25) her die beiden 3/2-Wege-Schaltventile (122 und 123) so angesteuert werden, daß die Druckräume aller angeschlossenen Durchlaß- und Absperrventile (106, 107, 108, 109) entweder druckentlastet oder druckbeaufschlagt sind. Die Sicherstellung des Stelldruckes im Hydrowandler (16) erfolgt versorgungsblockintern über den nach dem Rückschlagventil liegenden Teil der Leitung (162) sowie die von dieser abzweigende Leitung (166) und den nach dem Rückschlagventil liegenden Teil der Leitung (161) zum Steuerausgang (40) des Ölversorgungsblockes (24) hin und von dort über die externe Steuerdruckleitung (41). Auch der diesbezügliche Förderweg ist in Figur 6 eingetragen.

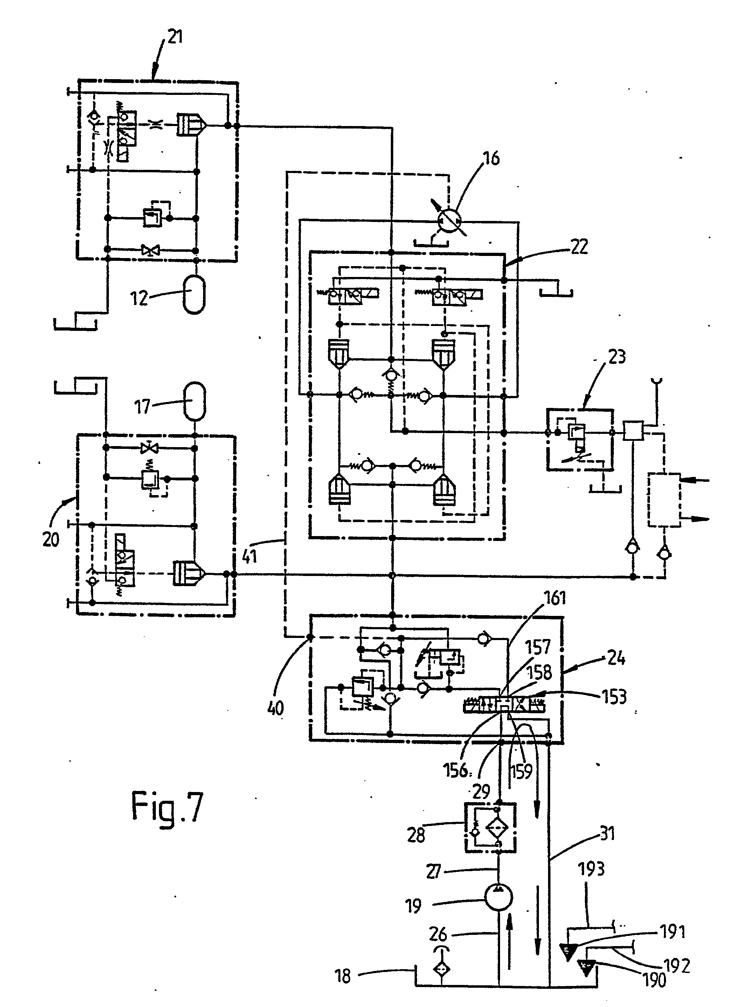

In Figur 7 schließlich ist die dritte Funktion des Ölversorgungsblockes (24) dargestellt, wobei sich das 4/3-Wege-Schaltventil (153) tatsächlich in der dargestellten Stellung befindet, in der der Eingangsanschluß (156) mit dem Entlastungsausgangsanschluß (159) kurzgeschlossen ist, so daß das von der Förderpumpe (19) geförderte Öl direkt wieder zum Hydrauliköltank (18) zurückgefördert wird. Diese Funktion des Ölversorgungsblockes ist für alle jene Fälle notwendig, in denen die Bremsenergierückgewinnungseinrichtung vom Antriebsstrang des Fahrzeugs abgeschaltet ist. Auch dieser Kurzschlußbetrieb des Ölversorgungsblockes 24 ist in Figur 7 durch Pfeile eingetragen.

Wie bereits weiter vorn dargelegt, ist die gesamte Bremsenergierückgewinnungseinrichtung modular aufgebaut. Dies erlaubt eine vorteilhafte Fertigung, außerdem eine optimale räumliche und funktionsmäßige Zuordnung der Module untereinander sowie günstige Anordnung derselben am Fahrzeug. Außerdem ist hierdurch eine vorteilhafte Leitungsverlegung, insbesondere auch in dem Sinne möglich, daß im Fall einer Fehlfunktion sowohl der betreffende Modul als auch der Leitungsweg rasch und schnell ausgetauscht werden können.

Die schaltbare Kupplung (13) ist vorzugsweise in das Gehäuse des Kennungswandlers (6) integriert. Der Hydrowandler (16) ist vorzugsweise unmittelbar anschließend aunen am Gehäuse des Kennungswandlers (6) befestigt. Diese Anordnung der beiden Teile (13 und 16) der Bremsenergierückgewinnungseinrichtung ist platzsparend und erweist sich insbesondere wegen der kurzen Kraftübertragungswege äußerst funktionsgerecht.

## Patentansprüche

1. Kraftfahrzeug mit einer Antriebseinrichtung für eine Hinterachse (9), bestehend aus Verbrennungsmotor (1) und automatisiert schaltbarem Getriebe (6), an dessen primärer Abtriebswelle (7) der Hinterachsantriebsstrang (8) angeschlossen und an dessen sekundärer Abtriebswelle (14) nur während bestimmter Fahrbetriebszustände mittels einer Schaltkupplung (13) die Triebwelle (15) eines Hydrowandlers (16) ankuppelbar und dadurch ein Bremsenergie-Rückgewinnungs-System aktivierbar ist, in welchem Fall dann der hinsichtlich seiner Förderleistung durch ein um einen Winkel größer/gleich 0 verschwenkbares Organ verstellbare sowie das energieübertragende Teil des Bremsenergie-Rückgewinnungssystems bildende Hydrowandler (16) während des Bremsbetriebes des Fahrzeugs als Pumpe wirkend Hydrauliköl von einem Niederdruckspeicher (17) über einen Umsteuerblock (22) zu einem Hochdruckspeicher (12) fördert, beim Anfahren und Beschleunigen des Fahrzeugs dagegen durch Entladung des Hochdruckspeichers (12) zurück zum Niederdruckspeicher (17) als Motor angetrieben Leistung an den Antriebsstrang (8) abgibt, wobei der Hydrowandler (16) mit je einem seiner beiden Arbeitsanschlüsse (46, 48) mit je einem Anschluß (45, 50) des bei gleichbleibender Drehrichtung des Hydrowandlers (16) die Hydraulikölflußrichtung zwischen den beiden Speichern (12, 17) umkehrenden Umsteuerblockes (22) verbunden ist, wobei an je einem weiteren Anschluß (33, 42) des letzteren je einer der beiden Speicher (12, 17) angeschlossen und in jede der diesbezüglichen Verbindungsleitungen (36, 58 bzw. 43, 62) ein zur sicheren Beherrschung von Lade-, Entlade- und Absperrvorgängen des zugehörigen Speichers (12 bzw. 17) dienender Steuerblock (20 bzw. 21) eingeschaltet ist, der unter anderem ein hydraulisch gesteuertes Durchlaß-Absperrventil (64 bzw. 68) mit zugeordnetem, in einen steuerblockinternen hydraulischen Steuerkreis eingeschaltes, elektromagnetisch betätigbares 3/2-Wege-Schaltventil (65 bzw. 68) aufweist, wobei besagter Umsteuerblock (22) vier Durchlaß-Absperrventile (106, 107, 108, 109) aufweist, die¯ hydraulisch beaufschlagt paarweise durch jeweils ein in einen hydraulischen Steuerkreis eingeschaltetes, elektromagnetisch betätigbares und elektronisch angesteuertes 3/2-Wege-Schaltventil (122 bzw. 123) schaltbar sind, wobei alle Durchlaßräume (110, 113, 116, 119) der besagten Durchlaß-Absperrventile (106, 107, 108, 109) durch blockinterne Leitungen (140, 141, 142, 149, 150) mit eingebauten Rückschlagventilen über einen gemeinsamen Ausgang (52) des Umsteuerblockes (22) an eine Druckbegrenzungseinheit (23) angeschlossen und außerdem über andere blockinterne Leitungen (130, 131, 135, 136) jeweils paarweise mit einem bestimmten der vier genannten Anschlüsse (33, 42, 45, 50) verbunden sind, daß außerdem ein Hydrauliköltank (18) und eine Förderpumpe (19) mit nachgeschaltetem Ölversorgungsblock (24), der hydraulische Drucksteuerorgane (154, 155) und wenigstens ein elektrisch betätigbares Schaltventil (153) aufweist, zur mengen- und druckmäßig ausreichenden Grundversorgung des Systems und Verstellung des Hydrowandlers (16) vorgesehen sind, und daß ein Leitrechner (25) vorhanden ist, der auf der Basis ihm von Sensoren (177, 179, 182, 184, 186, 188, 190) gelieferter Betriebszustands-Istwerte per Programm eine entsprechende Signalgabe an die elektrischen Betätigungsorgane der Schaltkupplung (13) sowie der angeschlossenen Teile des Bremsenergie-Rückgewinnungs-Systems für entsprechend notwendige Lade- und Entladeoperationen des Hochdruckhydrospeichers (12) steuert.

2. Kraftfahrzeug nach Anspruch 1, dadurch gekennzeichnet, daß die besagte Schaltkupplung (13) innerhalb des Gehäuses des besagten automatisch schaltbaren Getriebes (6) angeordnet ist und besagter Hydrowandler (16) außen an besagtem Gehäuse angebaut ist.

3. Kraftfahrzeug nach Anspruch 1, dadurch gekennzeichnet, daß die beiden besagten Steuerblöcke (21, 22), der besagte Ölversorgungsblock (24) und der besagte Umsteuerblock (22) jeweils als eine einen Modul bildende Funktionsbaugruppe realisiert sind, welche Module über besagte hydraulische Verbindungsleitungen (43, 46, 34) miteinander verknüpft sind.

4. Kraftfahrzeug nach Anspruch 3, dadurch gekennzeichnet, daß der besagte, dem Niederdruckhydrospeicher (17) zugeordnete Steuerblock (20) außer dem hydraulisch gesteuerten Durchlaß-Absperrventil (64) und dem durch Befehle des besagten Leitrechners (25) gesteuerten 3/2-Wege-Schaltventil (65) ein Druckbegrenzungsventil (66) sowie eine Absperrdrossel (67) aufweist, wobei mit dem Schließorgan (70) des besagten Durchlaß-Absperrventiles (64) eine durch den Durchlaßraum (69) desselben führende, zwischen Eingang (35) und Ausgang (56) des Steuerblockes (20) liegende Leitung (68, 68/1, 68/2) auf- und zusteuerbar ist für Lade- und Entladevorgänge des am Ausgang (56) über eine Zuleitung angeschlossenen Niederdruckhydrospeichers (17), wobei ferner das besagte Druckbegrenzungsventil (66) in eine Leitung (82) eingeschaltet ist, die von dem nach besagtem Durchlaß-Absperrventil (64) gegebenen Teil (68/2) der besagten Leitung (68) abzweigt und in eine Entlastungsleitung (76) einmündet, die einerseits am Entlastungsausgang (75) des 3/2-Wege-Schaltventiles (65) abzweigt und zum Entlastungsausgang (57) des Steuerblokkes (20) hinführt, der über eine Entlastungsleitung (59) mit dem besagten Hydrauliköltank (18) in Verbindung steht, und wobei die besagte Absperrdrossel (67) parallel zum besagten Druckbegrenzungsventil (66) angeordnet ist.

5. Kraftfahrzeug nach Anspruch 4, dadurch gekennzeichnet, daß der hydraulische Steuerkreis innerhalb des besagten Steuerblockes (20) aus folgenden Leitungsteilen gebildet ist, nämlich einer vom nach besagtem Durchlaß-Absperrventil (64) liegenden Teil (68/2) der besagten Leitung (68) abzweigenden Zuleitung (80), die zum einen Eingang eines Wechselventils (78) hinführt, an dessen anderem Eingang eine Zuleitung (79) angeschlossen ist, die vom vor besagtem Durchlaß- und Absperrventil (64) liegenden Teil (68/1) der besagten Leitung (68) abzweigt, daß ferner der Ausgang des Wechselventils (78) über eine Zuleitung (77) mit dem Druckeingangsanschluß (74) des besagten 3/2-Wege-Schaltventils (65) verbunden ist, dessen Ausgangsanschluß (73) wiederum über eine Verbindungsleitung (72) mit dem Druckraum (71) des besagten Durchlaß- und Absperrventils (64) in Verbindung steht.

6. Kraftfahrzeug nach Anspruch 3, dadurch gekennzeichnet, daß der besagte, dem Hochdruckhydrospeicher (12) zugeordnete Steuerblock (21) außer dem hydraulisch gesteuerten Durchlaß-Absperrventil (84) und dem durch Befehle von besagtem Leitrechner (25) gesteuerten 3/2-Wege-Schaltventil (85) noch ein Druckbegrenzungsventil (86) sowie eine Absperrdrossel (87) aufweist, wobei mit dem Schließorgan (90) des besagten Durchlaß-Absperrventils (84) eine durch den Durchlaßraum (89) desselben führende, zwischen Eingang (44) und Ausgang (60) des besagten Steuerblockes (21) liegende Leitung (88; 88/1, 88/2) auf- und zusteuerbar ist für Lade- und Entladevorgänge des am Ausgang (60) über eine Zuleitung (62) angeschlossenen Hochdruckhydrospeichers (12), wobei ferner das besagte Druckbegrenzungsventil (86) in eine Leitung (104) eingeschaltet ist, die von dem nach besagtem Durchlaß-Absperrventil (84) liegenden Teil (88/2) der besagten Leitung (88) abzweigt und in eine Entlastungsleitung (97) einmündet, die am Entlastungsausgang (96) des besagten 3/2-Wege-Schaltventils (85) abzweigt, außerdem eine Drossel (98) aufweist und zum Entlastungsausgang (61) des besagten Steuerblockes (21) hinführt, der über eine Entlastungsleitung (63) mit dem besagten Hydrauliköltank (18) in Verbindung steht, und wobei die besagte Absperrdrossel (87) parallel zum besagten Druckbegrenzungsventil (86) angeordnet ist.

7. Kraftfahrzeug nach Anspruch 6, dadurch gekennzeichnet, daß der hydraulische Steuerkreis innerhalb des besagten Steuerblockes (21) aus folgenden Leitungsteilen gebildet ist, nämlich einer vom nach besagtem Durchlaß-Absperrventil (84) liegenden Teil (88/2) der Leitung (88) abzweigenden Zuleitung (102), die zum einen Eingang eines Wechselventils (100) hinführt, an dessen anderem Eingang eine Zuleitung (101) angeschlossen ist, die vom vor besagtem Durchlaß-Absperrventil (84) liegenden Teil (88/1) der besagten Leitung (88) abzweigt, daß ferner der Ausgang des besagten Wechselventils (100) über eine Zuleitung (99) mit dem Druckeingangsanschluß (95) des besagten 3/2-Wege-Schaltventils (85) verbunden ist, dessen Ausgangsanschluß (94) wiederum über eine Verbindungsleitung (92), in die eine Drossel (93) eingeschaltet ist, mit dem Druckraum (91) des besagten Durchlaß-Absperrventils (84) in Verbindung steht.

8. Kraftfahrzeug nach Anspruch 1, dadurch gekennzeichnet, daß von den vier in besagtem Umsteuerblock (22) vorhandenen Durchlaß-Absperrventilen (106, 107, 108, 109) die Druckräume (112, 118 bzw. 115, 121) jeweils zweier derselben mit dem Ausgangsanschluß (124 bzw. 127) eines der beiden besagten 3/2-Wege-Schaltventile (122, 123) in Verbindung stehen.

9. Kraftfahrzeug nach Anspruch 8, dadurch gekennzeichnet, daß die jeweils mittels ihres Schließorganes (111, 117) absperrbaren Einlässe der beiden am besagten ersten 3/2-Wege-Schaltventil (122) angeschlossenen Durchlaß-Absperrventile (106, 108) jeweils mit einem durch ein Schließorgan (114 bzw. 120) absperrbaren Einlaß eines der beiden anderen, an dem besagten zweiten 3/2-Wege-Schaltventil (123) angeschlossenen Durchlaß-Absperrventile (107, 109) über je eine Leitung (130 bzw. 131) in Verbindung stehen, wobei die eine (130) dieser Leitungen über eine abzweigende Zuleitung (132, 47) mit dem ersten Arbeitsanschluß (46) des besagten Hydrowandlers (16) und die zweite (131) der beiden besagten Leitungen über eine abzweigende Zuleitung (133, 49) mit dem zweiten Arbeitsanschluß (48) des besagten Hydrowandlers (16) in Verbindung steht.

10. Kraftfahrzeug nach den Ansprüchen 8 und 9, dadurch gekennzeichnet, daß die beiden Durchlaßräume (110, 116) der beiden am ersten 3/2-Wege-Schaltventil (122) angeschlossenen Durchlaß-Absperrventile (106, 108) jeweils über eine Leitung (134 bzw. 136) mit einem Durchlaßraum (113 bzw. 119) eines der beiden besagten anderen der am besagten zweiten 3/2-Wege-Schaltventil (123) angeschlossenen Durchlaß-Absperrventile (107, 109) verbunden sind, und daß die eine (134) der besagten beiden Leitungen über eine abzweigende Zuleitung (135, 43) mit dem absperrbaren Einlaß des Durchlaß-Absperrventiles (84) im besagten hochdruckspeicherseitigen Absperrblock (21) und die andere (136) der beiden besagten Leitungen über eine abzweigende Zuleitung (137, 34, 36) mit dem absperrbaren Einlaß des Durchlaß-Absperrventils (64) im besagten niederdruckspeicherseitigen Steuerblock (20) in Verbindung steht.

11. Kraftfahrzeug nach Anspruch 3, dadurch gekennzeichnet, daß der besagte Ölversorgungsblock (24) einen Eingang (29) aufweist, der über eine Förderleitung (27) mit der besagten, Öl aus dem besagten Hydrauliköltank (18) ansaugenden Förderpumpe (19) in Verbindung steht, daß der besagte Ölversorgungsblock (24) ferner drei Ausgänge aufweist, nämlich einen Entlastungsausgang (30), der über eine Rücklaufleitung (31) mit dem besagten Hydrauliköltank (18) in Verbindung steht, ferner einen Steuerausgang (40), an dem über eine Steuerdruckleitung (41) die Schwenkwinkelverstelleinrichtung des besagten Hydrowandlers (16) angeschlossen ist, und schließlich einen Ölversorgungsausgang (32), an dem leitungsmäßig der besagte niederdruckspeicherseitige Steuerblock (20) sowie der besagte Umsteuerblock (22) angeschlossen sind, und daß der Ölversorgungsblock (24) ein elektrisch vom besagten Leitrechner (25) steuerbares 4/3-Wege-Schaltventil (153) aufweist, dessen Eingangsanschluß (156) mit dem besagten Eingang (29) des Ölversorgungsblockes (24) und dessen Entlastungsausgang (159) über einen Kanal (160, 31) mit dem besagten Hydrauliköltank (18) in Verbindung steht, während über den ersten Druckausgangsanschluß (157) des besagten 4/3-Wege-Schaltventils (153) über eine Leitung (162) und ein daran angeschlossenes Druckzuschaltventil (154) Öl an den besagten Ölversorgungsausgang (32) des Ölversorgungsblockes (24) lieferbar und Öl zu hohen Druckes über ein Niederdruckbegrenzungsventil (155) zum besagten Entlastungsausgang (30) des Ölversorgungsblockes (24) hin absteuerbar ist, daß ferner am zweiten Druckausgangsanschluß (158) des besagten 4/3-Wege-Schaltventils (153) der besagte Steuerausgang (40) des Ölversorgungsblockes (24) über eine Leitung (161) angeschlossen ist, aus der Öl zu hohen Druckes über eine Abzweigleitung (166) sowie das besagte Niederdruckbegrenzungsventil (155) zum besagten Entlastungsausgang (30) des Ölversorgungsblockes (24) hin absteuerbar ist, und daß Ölrückflüsse in den besagten Leitungen durch eingeschaltete Rückschlagventile verhindert sind.

## Claims

1. Motor vehicle with a drive device for a rear axle (9) comprising a combustion engine (1) and automatically switchable gearing (6), to the primary output shaft (7) of which is connected the rear axle drive line (8) and to the secondary output shaft (14) of which may be coupled the power shaft (15) of a hydraulic converter (16) only during certain running operating states by means of a switch coupling (13) and a brake energy recovery system may thereby be activated, in which case the hydraulic converter (16), which as regards its conveying power is adjustable by a member pivotal about an angle greater than or equal to zero and which forms the energy-transmtting part of the brake energy recovery system, during the braking operation of the vehicle, acts as a pump to convey hydraulic oil from a low-pressure reservoir (17) via a changeover block (22) to a high-pressure reservoir (12), but during start-up and acceleration of the vehicle by discharging the high-pressure reservoir (12) back to the low-pressure reservoir (17) driven as a motor outputs power to the drive line (8), the hydraulic converter (16) being connected by means respectively of one of its two operating connections (46, 48) to a respective connection (45, 50) of the changeover (22) which, with the direction of rotation of the hydraulic converter (16) remaining the same, reverses the hydraulic oil flow direction between the two reservoirs (12, 17), in each case one of the two reservoirs (12, 17) being connected to a respective further connection (33, 42) of the changeover block (22), and a control block (20 or 21) serving for the reliable control of charging, discharging and shut-off procedures of the associated reservoir (12 or 17) being placed in each of the associated connecting lines (36, 58 or 43, 62) and having inter alia a hydraulically controlled passage and shut-off valve (64 or 68) with an associated, electromagnetically actuable 3/2-way control valve (65 or 68) placed in a hydraulic control circuit within the control block, the said changeover block (22) having four passage and shut-off valves (106, 107, 108, 109) which may be switched in pairs when acted upon hydraulically through a respective electromagnetically actuable and electronically driven 3/2-way control valve (122 or 123) which is placed in a hydraulic control circuit, all the passage spaces (110, 113, 116, 119) of the said passage and shut-off valves (106, 107, 108, 109) being connected by lines (140, 141, 142, 149, 150) within the block with built-in non-return valves via a common outlet (52) of the changeover block (22) to a pressure-relief unit (23) and moreover being connected via other lines (130, 131, 135, 136) within the block respectively in pairs to a specific one of the said four connections (33, 42, 45, 50), in that moreover a hydraulic oil tank (18) and a conveying pump (19) with downstream oil supply block (24) which has hydraulic pressure control members (154, 155) and at least one electrically actuable control valve (153) are provided for the basic supply to the system of sufficient quantity and pressure and for the adjustment of the hydraulic converter (16), and in that a master computer (25) is present which on the basis of the actual operating state values supplied to it by sensors (177, 179, 182, 184, 186, 188, 190) controls a corresponding signal emission to the electrical actuating members of the switch coupling (13) and the connected parts of the brake energy recovery system for correspondingly necessary charge and discharge operations of the high-pressure hydraulic reservoir (12).

2. Motor vehicle according to claim 1, characterized in that the said switch coupling (13) is arranged within the housing of the said automatically switchable gearing (6) and the said hydraulic converter (16) is connected on the outside of the said housing.

3. Motor vehicle according to claim 1, characterized in that the two said control blocks (21, 22), the said oil supply block (24) and the said changeover block (22) are each in the form of a functional assembly forming a module, these modules being linked to one another via the said hydraulic connection lines (43, 46, 34).

4. Motor vehicle according to claim 3, characterized in that the said control block (20) associated with the low-pressure hydraulic reservoir (17) has, in addition to the hydraulically controlled passage and shut-off valve (64) and the 3/2-way control valve (65) controlled by commands from the said master computer (25), a pressure-relief valve (66) and a shut-off valve (67), a line (68, 68/1, 68/2) leading through the passage space (69) of the passage and shut-off valve (64) and located between the inlet (35) and outlet (56) of the control block (20) being operable on and off by means of the closing member (70) of the said passage and shut-off valve (64) for charging and discharging procedures of the low-pressure hydraulic reservoir (17) connected at outlet (56) via a supply line, with the said pressure-relief valve (66) further being placed in a line (82) which branches off from the part (68/2) of the said line (68) after the said passage and shut-off valve (64) and opens into a discharge line (76) which on the one hand branches off at the discharge outlet (75) of the 3/2-way control valve (65) and leads to the discharge outlet (57) of the control block (20) which is connected via a discharge line (59) to the said hydraulic oil tank (18), and the said shut-off throttle (67) being arranged parallel to the said pressure-relief valve (66).

5. Motor vehicle according to claim 4, characterized in that the hydraulic control circuit is formed within the said control block (20) from the following line parts, namely a supply line (80) which branches off from the part (68/2) of the said line (68) after the said passage and shut-off valve (64) and which leads to one inlet of a changeover valve (78) at the other inlet of which there is connected a supply line (79) which branches off from the part (68/1) of the said line (68) before the said passage and shut-off valve (64), in that further the outlet of the changeover valve (78) is connected via a supply line (77) to the pressure inlet connection (74) of the said 3/2-way control valve (65) whereof the outlet connection (73) is in turn connected via a connection line (72) to the pressure space (71) of the said passage and shut-off valve (64).

6. Motor vehicle according to claim 3, characterized in that the said control block (21) associated with the high-pressure hydraulic reservoir (12) has, in addition to the hydraulically controlled passage and shut-off valve (84) and the 3/2-way control valve (85) controlled by commands from the said master computer (25), a pressure-relief valve (86) and a shut-off throttle (87), a line (88; 88/1, 88/2) leading through the passage space (89) of the passage and shut-off valve (84) and located between the inlet (44) and outlet (60) of the said control (21) being operable on and off by means of the closing member (90) of the said passage and shut-off vlave (84) for charging and discharging procedures of the high-pressure hydraulic reservoir (12) connected at the outlet (60) via a supply line (62), the said pressure-relief valve (86) further being placed in line (104) which branches off from the part (88/2) of the said line (88) after the said passage and shut-off valve (84) and opens into a discharge line (97) which branches off at the discharge outlet (96) of the said 3/2-way control valve (85), and furthermore having a throttle (98) and leading to the discharge outlet (61) of the said control block (21) which is connected via a discharge line (63) to the said hydraulic oil tank (18), and the said shut-off throttle (87) being arranged parallel to the said pressure-relief valve (86).

7. Motor vehicle according to claim 6, characterized in that the hydraulic control circuit is formed within the said control block (21) from the following line parts, namely a supply line (102) which branches off from the part (88/2) of the line (88) after the said passage and shut-off valve (84) and which leads to one inlet of a changeover valve (100) at the other inlet of which there is connected a supply line (101) which branches off from the part (88/1) of the said line (88) in front of the said passage and shut-off valve (84), in that further the outlet of the said changeover valve (100) is connected via a supply line (99) to the pressure inlet connection (95) of the said 3/2-way control valve (85) whereof the outlet connection (94) is in turn connected via a connection line (92) in which a throttle (93) is placed to the pressure space (91) of the said passage and shut-off valve (84).

8. Motor vehicle according to claim 1, characterized in that of the four passage and shut-off valves (106, 107, 108, 109) in the said changeover block (22), the pressure spaces (112, 118 or 115, 121) of in each case two of these are connected to the outlet connection (124 or 127) of one of the said 3/2-way control valves (122, 123).

9. Motor vehicle according to claim 8, characterized in that the inlets of the two passage and shut-off valves (106, 108) connected to the said first 3/2-way control valve (122), which inlets can be shut off in each case by means of their closing member (111, 117), are connected in each case to an inlet of one of the other two passage and shut-off valves (107, 109), connected to the said second 3/2-way control valve (123), it being possible to shut off this inlet by a closing member (114 or 120), via a respective line (130 or 131), one (130) of these lines being connected via a branching supply line to the first operating connection (46) of the said hydraulic converter (16) and the second (131) of the said two supply lines (133, 49) being connected to the second operating connection (48) of the said hydraulic converter (16).

10. Motor vehicle according to claim 8 and 9, characterized in that the two passage spaces (110, 116) of the said two passage and shut-off valves (106, 108) connected to the first 3/2-way control valve (122) are each connected via a line (134 or 136) to a passage space (113 or 119) of one of the two said other passage and shut-off valves (107, 109) connected to the said second 3/2-way control valve (123), and in that one (134) of the two said lines is connected via a branching supply line (135, 43) to the inlet, which may be shut off, of the passage and shut-off valve (84) in the said high-pressure reservoir-end shut-off block (21) and the other (136) of the said two lines is connected via a branching supply line (137, 34, 36) to the inlet, which may be shut off, of the passage and shut-off valve (64) in the said low-pressure reservoir-end control block (20).

11. Motor vehicle according to claim 3, characterized in that the said oil supply block (24) has an inlet (29) which is connected via a conveying line (27) to the said conveying pump (19) sucking fluid out of the said hydraulic oil tank (18), in that the said oil supply block (24) further has three outlets, namely a discharge outlet (30) which is connected via a return line (31) to the said hydraulic oil tank (18), further a control outlet (40) to which there is connected via a control pressure line (41) the angle of pivoting adjustment device of the said hydraulic converter (16), and finally an oil supply outlet (32) to which there are connected by way of lines the said low-pressure reservoir-side control block (20) and the said changeover block (22), and in that the oil supply block (24) has a 4/3-way control valve (153) controllable electrically from the said master computer (25), the inlet connection (156) of this 4/3-way control valve being connected to the said inlet (29) of the oil supply block (24) and the discharge outlet (159) thereof being connected via a channel (160, 31) to the said hydraulic oil tank (18), while via the first pressure outlet connection (157) of the said 4/3-way control valve (153) via a line (162) and connected thereto a pressure connection valve (154) oil can be supplied to the said oil supply outlet (32) of the oil supply block (24) and oil at high pressure can be diverted via a low-pressure relief valve (155) to the said discharge outlet (30) of the oil supply block (24), in that further at the second pressure outlet connection (158) of the said 4/3-way control valve (153) the said control outlet (40) of the oil supply block (24) is connected via a line (161) from which oil at high pressure can be diverted via a branching line (166) and the said low-pressure relief valve (155) to the said discharge outlet (30) of the oil supply block (24), and in that oil return flows are prevented in the said lines by non-return valves which are placed therein.

## Revendications

1. Véhicule automobile avec un dispositif de propulsion pour un essieu arrière (9), constitué d'un moteur à combustion interne (1) et d'une boîte de vitesse à commande automatisée (6), la ligne de transmission (8) à l'essieu arrière etant raccordée à l'arbre de sortie primaire (7) de cette boîte de vitesse, l'arbre d'entraînement (15) d'un convertisseur hydraulique (16) ne pouvant être accouplé a l'arbre de sortie secondaire (14) de la boîte de vitesses que pendant certaines conditions de marche au moyen d'un embrayage commandé (13), un système de récupération d'énergie de freinage étant ainsi mis en action et, dans ce cas, le convertisseur hydraulique (16), dont la capacité de refoulement est réglable au moyen d'un organe pivotant d'un angle supérieur ou égal à 0 et qui constitue la partie de transmission d'énergie du système de récupération d'énergie de freinage, fonctionne comme une pompe pendant le service de freinage du véhicule en refoulant du liquide hydraulique d'un accumulateur à basse pression (17) a un accumulateur à haute pression (12) par l'intermédiaire d'un bloc d'inversion (22), ce convertisseur étant en revanche entraîné comme un moteur, lors du démarrage et de l'accélération du véhicule, par décharge de l'accumulateur à haute pression (12) en retour vers l'accumulateur à basse pression (17), et fournissant de l'énergie à la ligne de transmission (8), le convertisseur hydraulique (16) étant respectivement relié, par l'un de ses deux raccords de travail (46, 48), à un raccord correspondant (45, 50) du bloc d'inversion (22) qui, lorsque le sens de rotation du convertisseur hydraulique (16) reste le même, inverse le sens d'écoulement du liquide hydraulique entre les deux accumulateurs (12, 17), l'un des deux accumulateurs (12, 17) étant respectivement raccordé a un autre raccord correspondant (33, 42) de ce bloc, un bloc de commande (20 , 21), servant a maîtriser sûrement les opérations de charge, de décharge et de fermeture de l'accumulateur correspondant (12 ; 17), étant branché dans chacune des conduites de liaison correspondante (36, 58; 43, 62), ce bloc comportant, entre autres, une soupape de passage et d'arrêt à commande hydraulique (64; 68) avec un soupape de commande associée (65; 68) à trois voies et deux positions à commande électromagnétique branchée dans un circuit de commande hydraulique interne du bloc de commande, ledit bloc d' inversion (22) comportant quatre soupapes de passage et d'arrêt (106, 107, 108, 109) sollicitées hydrauliquement et commandés par paire par une soupape de commande associée (122; 123) à trois voies et deux positions branchée dans un circuit de commande hydraulique, actionnée par voie électromagnétique et commandée par voie électronique, toutes les chambres de passage (110, 113, 116, 119) desdites soupapes de passage et d'arrêt (106, 107, 108, 109) étant en liaison, par des conduites internes (140, 141, 142, 149, 150) du bloc et par l'intermédiaire d'une sortie commune (52) du bloc d'inversion (22) avec une unité de limitation de pression (23) et étant en outre reliées, par d'autres conduites internes (130, 131, 135, 136) du bloc, chaque fois par paires, à un raccord déterminé parmi les quatre raccords mentionnés (32, 42, 45, 50), un réservoir de liquide hydraulique (18), et une pompe de refoulement (19) avec un bloc d'alimentation en liquide hydraulique (24) branché à la suite étant en outre prévus pour l'alimentation de base suffisante en débit et en pression du système et le réglage du convertisseur hydraulique (16), le bloc d'alimentation comportant des organes de commande de pression hydrauliques (154, 155) et au moins une soupape de commande ( 153 ) actionnée électriquement, un ordinateur pilote (25) étant en outre prévu et commandant par programme, sur la base de valeurs réelles de conditions de fonctionnement qui lui sont fournies par des capteurs (177, 179, 182, 184, 186, 188, 190), un envoi de signaux appropriés aux organes électriques de manœuvre de l'embrayage commandé (13) ainsi qu'aux éléments raccordés du système de récupération d'énergie de freinage pour des opérations de charge et de décharge correspondantes et nécessaires de l'accumulateur hydraulique à haute pression (12).

2. Véhicule automobile selon la revendication 1, caractérisé en ce que ledit embrayage commandé (13) est disposé a l'intérieur du carter de ladite boîte de vitesse à commande automatique (6) et ledit convertisseur hydraulique (16) est monté extérieurement sur ledit carter.

3. Véhicule automobile selon la revendication 1, caractérisé en ce que les deux dits blocs de commande (21, 22), ledit bloc d'alimentation en liquide hydraulique (24) et ledit bloc d'inversion (22) sont chacun réalisés sous forme d'un groupe de construction fonctionnel formant module, ces modules étant combinés entre eux par lesdites conduites de liaison hydrauliques (43, 46, 34).

4. Véhicule automobile selon la revendication 3, caractérisé en ce que ledit bloc de commande (20) associé à l'accumulateur hydraulique à basse pression (17) comporte en plus, une soupape de passage et d'arrêt ( 64 ) à commande hydraulique avec une soupape de commande associée (65) à trois voies et deux positions branchée dans un circuit de commande hydraulique à l'intérieur du bloc de commande, actionnée par voie électromagnétique et commandée par des ordres dudit ordinateur pilote (25), une soupape de limitation de pression (66) ainsi qu'une vanne d'étranglement et d'arrêt (67), l'obturateur (70) de la soupape de passage et d'arrêt (64) permettant de commander l'ouverture et la fermeture d'une conduite (68, 68/1, 68/2) passant par la chambre de passage (69) de la soupape et située entre l'entrée (35) et la sortie (56) du bloc de commande (20), pour les opérations de charge et de décharge de l'accumulateur hydraulique à basse pression (17) raccordé à la sortie (56) par une conduite d'amenée (58), ladite soupape de limitation de pression (66) étant en outre, branchée dans une conduite (82) qui part de la partie (68/2) de ladite conduite (68) située après ladite soupape de passage et d'arrêt (64) et qui débouche dans une conduite de décharge (76) qui part à son tour de la sortie de décharge (75) de la soupape à trois voies et à deux positions (65) et qui va à la sortie de décharge (57) du bloc de commande (20), cette sortie étant en liaison par une conduite de décharge (59) avec ledit réservoir de liquide hydraulique (18), ladite vanne d'étranglement et d'arrêt (67) étant disposée en parallèle à ladite soupape de limitation de pression (66).

5. Véhicule automobile selon la revendication 4, caractérisé en ce que le circuit de commande hydraulique intérieur dudit bloc de commande (20) est constitué des éléments de conduites suivants, à savoir une conduite (80) partant de la partie (68/2) de ladite conduite ( 68 ) située après ladite soupape de passage et d'arrêt (64), cette conduite allant à une entrée d'une soupape à deux voies (78), l'autre entrée etant raccordée à une conduite d'amenée (79) partant de la partie (68/1) de la conduite (68) située avant ladite soupape de passage et d'arrêt (64), en outre en ce que la sortie de la soupape à deux voies (78) est reliée par une conduite d'amenée (77) au raccord d'entrée de pression (74) de ladite soupape de commande à trois voies et deux positions (65), dont le raccord de sortie (73) est relié par une conduite de liaison (72) à la chambre de pression (71) de ladite soupape de passage et d'arrêt (64 ).

6. Véhicule automobile selon la revendication 3, caractérisé en ce que ledit bloc de commande (21) associé à l'accumulateur hydraulique à haute pression (12) comporte, en plus de la soupape de passage et d'arrêt (84) à commande hydraulique et de la soupape de commande à trois voies et deux positions (85) commandée par des ordres dudit ordinateur pilote (25), encore une soupape de limitation de pression (86) ainsi qu'un organe d'étranglement et d'arrêt (87), l'obturateur (90) de la soupape de passage et d'arrêt (84) permettant de commander l'ouverture et la fermeture d'une conduite (88, 88/1, 88/2) passant par la chambre de passage (89) de la soupape et située entre l'entrée (44) et la sortie (60) dudit bloc de commande (21), pour les opérations de charge et de décharge de l'accumulateur hydraulique à haute pression (12), raccordé à la sortie (60) par une conduite d'amenée (62), ladite soupape de limitation de pression (86) étant en outre branchée dans une conduite (104) qui part de la partie (88/2) de la conduite (88) située après ladite soupape de passage et d'arrêt (84) et qui debouche dans une conduite de décharge (97) partant de la sortie de décharge (96) de ladite soupape de commande à trois voies et deux positions (85), présentant en outre un étranglement (98) et allant à la sortie de décharge (61) dudit bloc de commande (21), cette sortie étant en liaison par une conduite de décharge (63) avec le réservoir de liquide hydraulique (18), ledit organe d'étranglement et d'arrêt (87) étant disposé en parallèle à la soupape de limitation de pression (86).

7. Véhicule automobile selon la revendication 6, caractérisé en ce que le circuit de commande hydraulique intérieur audit bloc de commande (21) est constitué des éléments de conduite suivants, à savoir une conduite (102) partant de la partie (88/2) de la conduite (88) située après ladite soupape de passage et d'arrêt (84), cette conduite allant à une entrée d'une soupape à deux voies (100), l'autre entrée étant raccordée à une conduite d'amenée (101) partant de la partie (88/1) de ladite conduite (88) située avant ladite soupape de passage et d'arrêt (84), en outre en ce que la sortie de ladite soupape à deux voies (100) est reliée par une conduite d'amenée (99) au raccord d'entrée de pression (95) de ladite soupape à trois voies et deux positions (85), dont le raccord de sortie (94) est relié par une conduite de liaison (92), dans laquelle est branché un étranglement (93), à la chambre de pression (91) de ladite soupape de passage et d'arrêt (84).

8. Véhicule automobile selon la revendication 1, caractérisé en ce que parmi les quatre soupapes de passage et d'arrêt (106, 107, 108, 109) se trouvant dans ledit bloc d'inversion (22), les chambres de pression respectives (112, 118 et 115, 121) de deux d'entre elles sont chaque fois en liaison avec le raccord de sortie (124; 127) de l'une des deux dites soupapes de commande à trois voies et deux positions (122, 123).

9. Véhicule automobile selon la revendication 8, caractérisé en ce que les entrées pouvant être fermées par leur obturateur respectif (111, 117), des soupapes de passage et d'arrêt (106, 108) raccordées à ladite première soupape de commande à trois voies et deux positions (122) sont respectivement en liaison par une conduite (130; 131) avec une entrée, pouvant être fermée par un obturateur (114; 120), de l'une des deux autres soupapes de passage et d'arrêt (107, 109) raccordées à ladite seconde soupape de commande à trois voies et deux positions (123), l'une (130) de ces conduites étant en liaison par une conduite de branchement (132, 47) avec le premier raccord (46) dudit convertisseur hydraulique (16) et la seconde conduite (131) étant en liaison par une conduite de branchement (133, 49) avec le second raccord (48) dudit convertisseur hydraulique (16).

10. Véhicule automobile selon les revendications 8 et 9, caractérisé en ce que les deux chambres de passage (110, 116) des deux dites soupapes de passage et d'arrêt (106, 108) raccordées à la première soupape de commande à trois voies et deux positions (122) sont respectivement reliées par une conduite (134; 136) à une chambre de passage (113; 119) de l'une des deux dites autres soupapes de passage et d'arrêt (107, 109) raccordées à ladite seconde soupape de commande à trois voies et deux positions (123), et en ce que l'une (134) des deux dites conduites est en liaison par une conduite d'amenée (135, 43) raccordée à l'entrée d'arrêt de la soupape de passage et d'arrêt (84) dudit bloc de commande (21) côté accumulateur à haute pression et l'autre (136) des deux dites conduites est en liaison par une conduite d'amenée (137, 34, 36) raccordée à l'entrée d'arrêt de la soupape de passage et d'arrêt (64) dudit bloc de commande (20) côté accumulateur à basse pression.

11. Véhicule automobile selon la revendication 3, caractérisé en ce que ledit bloc d'alimentation en liquide hydraulique (24) présente une entrée (29) qui est en liaison par une conduite de refoulement (27) avec ladite pompe de refoulement (19) aspirant dans le réservoir de liquide hydraulique (18), en ce que ledit bloc d'alimentation en liquide hydraulique (24) présente en outre trois sorties, à savoir une sortie de décharge (30), qui est en liaison par une conduite de retour (31) avec ledit réservoir de liquide hydraulique (18), en outre une sortie de commande (40), à laquelle est raccordé par une conduite de pression de commande (41) le dispositif de réglage d'angle de pivotement dudit convertisseur hydraulique (16) et, enfin, une sortie d'alimentation en liquide hydraulique (32), a laquelle sont raccordés par des conduites, ledit bloc de commande (20) côté accumulateur à basse pression ainsi que ledit bloc d'inversion (22), et en ce que le bloc d'alimentation en liquide hydraulique (24) comporte une soupape de commande à quatre voies et trois positions (153) commandée électriquement par ledit ordinateur pilote (25), le raccord d'entrée (156) de cette soupape étant en liaison avec ladite entrée (29) du bloc d'alimentation en liquide hydraulique (24) et la sortie de décharge (159) de cette soupape étant en liaison par un conduit (160, 31) avec ledit réservoir de liquide hydraulique (18), tandis que par le premier raccord de sortie de pression (157) de ladite soupape à quatre voies et trois positions (153), en passant par une conduite (162) et une soupape de commande de pression raccordée (154), du liquide hydraulique peut être envoyé à la sortie d'alimentation en liquide hydraulique (32) du bloc d'alimentation en liquide hydraulique (24) et du liquide à haute pression pouvant être commandée, par l'intermédiaire d'une soupape de limitation à basse pression (155), vers ladite sortie de décharge (30) du bloc d'alimentation en liquide hydraulique (24), en outre en ce que ladite sortie de commande (40) du bloc d'alimentation en liquide hydraulique (24) est raccordée par une conduite (161) au second raccord de sortie de pression (158) de la soupape de commande à quatre voies et trois positions (153), conduite à partir de laquelle du liquide à haute pression peut être commandé, en passant par une conduite de branchement (166) ainsi que ladite soupape de limitation à basse pression (155), vers ladite sortie de décharge (30) du bloc d'alimentation en liquide hydraulique (24), et en ce que les ecoulements de liquide en retour dans lesdites conduites sont évités par le branchement de clapets de retenue.

Fig.1

EP 0 248 178 B1

EP 0 248 178 B1

Fig.2

Fig.3

Fig. 4

Fig. 5

Fig. 6

Fig.7